# EUROPÄISCHE PATENTSCHRIFT

(11) **EP 3 964 318 B1**
(45) Veröffentlichungstag und Bekanntmachung des Hinweises auf die Patenterteilung: **19.10.2022**
(21) Anmeldenummer: 20194946.8
(22) Anmeldetag: 08.09.2020
(51) Int. Cl.: B23K 9/20

(54) **SCHWEISSKOPF ZUM BOLZENSCHWEISSEN MIT HUBZÜNDUNG ODER SPITZENZÜNDUNG**
WELDING HEAD FOR STUD WELDING WITH IGNITION BY ELEVATION OR TIP IGNITION
TÊTE DE SOUDAGE POUR GOUJONS À AMORÇAGE PAR ÉLOIGNEMENT OU PAR POINTAGE

(43) Veröffentlichungstag der Anmeldung: 09.03.2022
(73) Patentinhaber: Bolzenschweißtechnik Heinz Soyer GmbH, 82237 Wörthsee (DE)
(72) Erfinder: Jilg, Andreas Walter, 81735 München (DE)
(74) Vertreter: Thun, Clemens

(56) Entgegenhaltungen:
- DE-A1- 19 529 350
- DE-A1- 19 917 323
- DE-A1-102008 051 803
- DE-C2- 19 529 350
- DE-C2- 19 917 323

## Beschreibung

Die vorliegende Erfindung bezieht sich auf einen Schweißkopf zum Bolzenschweißen mit Hubzündung oder Spitzenzündung, auf eine Schweißvorrichtung, wie beispielsweise eine Schweißpistole, die einen derartigen Schweißkopf aufweist, sowie auf ein Verfahren zum Bolzenschweißen mit Hubzündung und ein Verfahren zum Bolzenschweißen mit Spitzenzündung gemäß dem Oberbegriff der Ansprüche 1, 13 und 14 (siehe z.B. DE 195 29 350 A1). Sowohl das Bolzenschweißverfahren mit Hubzündung als auch das Bolzenschweißverfahren mit Spitzenzündung dient zum Aufschweißen von vorwiegend stiftförmigen Bauteilen, den Bolzen, auf metallische Basismaterialien, bzw. auf einem metallischen Werkstück. Der Bolzen kann hierbei aus unlegiertem Stahl, Chromnickelstahl, Aluminium, Messing, Titan oder hitzebeständigen Legierungen gebildet sein.

Das Verfahren mit Hubzündung kann hierbei auch ein Verfahren mit Kurzzeithubzündung sein, und das Verfahren mit Spitzenzündung kann ein Spaltschweißverfahren oder ein Kontaktschweißverfahren sein. Das Verfahren mit Hubzündung weist im Vergleich zum Verfahren mit Spitzenzündung unterschiedliche Verfahrensschritte auf, wobei sich insbesondere die Bewegungsabläufe des Bolzens und des Werkstücks zueinander unterscheiden. Nicht nur die Bewegungen an sich, sondern auch die Dynamik der Bewegungen und die Präzisionsanforderung an die Bewegungen ist bei den Verfahren unterschiedlich, wobei im Verfahren mit Spitzenzündung eine hohe Dynamik, allerdings nur eine geringe Präzision erforderlich ist, und im Verfahren mit Hubzündung eine niedrige Dynamik aber eine hohe Präzision der Bewegung erforderlich ist.

Die beiden genannten Verfahren haben allerdings gemein, dass stets ein Lichtbogen gezündet wird, welcher das Bauteil und das Werkstück in einem dafür vorgesehenen Bereich stark erhitzt, sodass eine Schmelze, bzw. eine Schmelzlinse, in diesem Bereich entsteht, und wobei das Bauteil und das Werkstück in diesem Bereich aneinandergedrückt werden. Mit Erstarren des Materials ist der Bolzen auf dem Werkstück aufgeschweißt und somit starr verbunden.

Aus der bisher angewandten Praxis sind Schweißköpfe bekannt, welche zum Bolzenschweißen mit Hubzündung oder mit Spitzenzündung verwendet werden. Diese Schweißköpfe sind speziell auf ihren Anwendungsbereich angepasst, wobei nicht vorgesehen ist ein anderes Schweißverfahren als das für den Schweißkopf vorgesehene Verfahren anzuwenden. Derartige Schweißköpfe sind folglich unflexibel in ihrer Anwendung.

Es sind weiterhin Schweißköpfe zum Bolzenschweißen mit Hubzündung bekannt, welche einen Elektromotor zur Durchführung der Abhubbewegung aufweisen. Hierbei ist der Bolzen in einem Bolzenhalter eingesetzt, wobei der Bolzenhalter über einen Hubkolben mit dem Elektromotor gekoppelt ist. Durch Ansteuerung des Motors kann so der Bolzen vom Werkstück abgehoben und wieder zum Werkstück hinbewegt werden. Der Hubkolben ist hierbei mit dem Elektromotor verbunden, sodass eine Krafteinwirkung auf den Bolzen direkt auf den Elektromotor übertragen wird, was den Elektromotor beschädigt. Ebenso sind Schweißköpfe bekannt, welche aufwendige Verbundsysteme verwenden, um den Verschleiß zu verringern, diese sind allerdings mit hohen Kosten verbunden und nicht für kompakte Schweißsysteme, wie beispielsweise eine Schweißpistole, geeignet.

Der Erfindung liegt die Aufgabe zugrunde, zwei Verfahren zum Verschweißen eines Bolzens mit einem Werkstück, sowie einen Schweißkopf, respektive eine Schweißvorrichtung anzugeben, welche sich durch hohe Funktionssicherheit, Robustheit, Kompaktheit, und hoher Qualität der herzustellenden Schweißverbindung, sowie einer flexiblen Durchführung der zwei Schweißverfahren auszeichnen.

Diese Aufgabe wird durch einen Schweißkopf gemäß dem unabhängigen Anspruch 1 und durch eine Schweißvorrichtung gemäß dem unabhängigen Anspruch 12, sowie durch die Schweißverfahren gemäß den unabhängigen Ansprüchen 13 und 14 gelöst. Besondere Ausführungsarten der Erfindung sind in den abhängigen Ansprüchen angegeben.

Gemäß der Erfindung wird ein Schweißkopf zum Verschweißen eines Bolzens mit einem Werkstück vorgeschlagen, wobei der Schweißkopf einen Bolzenhalter, der in einem Gehäuse des Schweißkopfs entlang einer Achse beweglich gelagert ist, und ein Federelement, welches den Bolzenhalter entlang der Achse in Richtung des Werkstücks drückt, aufweist. Weiterhin weist der Schweißkopf einen elektrischen Antrieb auf, der über eine steuerbare Kupplungseinheit wahlweise mit dem Bolzenhalter koppelbar ist und in einem gekoppelten Zustand dazu ausgebildet ist, die Kupplungseinheit mit dem Bolzenhalter entlang der Achse zu verfahren.

Mit einem derartigen Schweißkopf ist folglich ermöglicht, dass der Bolzenhalter, und somit der im Bolzenhalter gehaltene Bolzen, entlang der Achse bewegt werden kann, wobei die Bewegung durch das Federelement verursacht werden kann und es ebenso ermöglicht ist, den Bolzenhalter durch einen elektrischen Antrieb, wie beispielsweise einen Elektromotor, entlang der Achse zu verfahren. Die Kopplung des elektrischen Antriebs über die steuerbare Kopplungseinheit ist hierbei je nach Bedarf verbindbar und lösbar. Mit dem Federelement des Schweißkopfs und der wahlweisen Kopplung des Bolzenhalters und des elektrischen Antriebs über die Kopplungseinheit, ist es möglich unterschiedliche Bewegungsabläufe des Bolzenhalters, respektive des Bolzens, entlang der Achse mit unterschiedlichen Dynamiken zu realisieren, wobei sowohl ein Schweißverfahren nach dem Prinzip der Hubzündung als auch ein Schweißverfahren nach dem Prinzip der Spitzenzündung mit dem selben Schweißkopf realisierbar ist. So kann der Bolzenhalter samt Bolzen entlang der Achse derart verfahren werden, dass die je nach Schweißverfahren vorgesehene Abhub- und Eintauchbewegung realisiert wird. Hierbei kann insbesondere vorgesehen sein, sowohl eine durch den elektrischen Antrieb erzeugte Bewegung entlang der Achse zu nutzen, als auch eine Bewegung, welche durch das Federelement erzeugt wird. Ebenso wird bei deaktivierter Kopplung erreicht, dass Krafteinwirkungen auf den Bolzenhalter, bzw. den Bolzen, nicht auf den elektrischen Antrieb übertragen werden, sodass der elektrische Antrieb nicht beschädigt wird, sodass der Verschleiß minimiert wird, während die Funktionssicherheit gewährleistet ist.

In einer bevorzugten Ausbildung des Schweißkopfs umfasst die Kopplungseinheit einen Elektromagneten.

In einer weiteren Ausführungsform ist der Schweißkopf durch eine, sich entlang der Achse erstreckende, Schweißachse gekennzeichnet, wobei die Schweißachse an ihrem vorderen Ende mit dem Bolzenhalter verbunden ist und an ihrem rückwärtigen Ende ein ferromagnetisches Element aufweist, das zum Zusammenwirken mit dem Elektromagneten ausgebildet ist.

Durch die Ausgestaltung der Kopplungseinheit mit einem Elektromagnet und der Schweißachse mit einem ferromagnetischen Element, wie beispielsweise einem Permanentmagneten, kann die Kopplung des Bolzenhalters mit dem elektrischen Antrieb gezielt aktiviert und deaktiviert werden, wodurch der Verschleiß der Komponenten minimiert ist. Diese Art der Kopplung ist weiterhin äußerst flexibel, da der Kopplungsprozess schnell durchführbar ist, und lediglich das Anschalten des Elektromagneten zumindest in der näheren Umgebung des ferromagnetischen Elements erfordert. Zudem weist eine derartige Kopplungseinheit einen hohen Wirkungsgrad auf, sodass ein derartiger Schweißkopf äußerst effizient ist.

Anstatt der bevorzugten Ausführung des Schweißkopfes mit der elektromagnetischen Kopplung ist es allerdings ebenso denkbar, dass die Kopplung durch die Kopplungseinheit mechanische Komponenten umfasst, sodass die Kopplung des elektrischen Antriebs und des Bolzenhalters, bzw. der Schweißachse, mittels einer mechanischen Verbindung, wie beispielsweise einer Verzahnung und/oder einem reversiblen Rasten von Komponenten und/oder einem Bajonettverschluss und/oder einer anderen Ausführung, realisiert wird. Ebenso sind weitere hier nicht aufgelistete Kopplungsarten denkbar. Insbesondere kann vorgesehen sein, dass die Kopplungseinheit auch als Getriebe gestaltet ist, wobei durch Ein-/ und Auskoppeln zweier Getriebeelemente ein Koppeln und Entkoppeln des elektrischen Antriebs mit dem Bolzenhalter, bzw. Schweißachse, bewerkstelligt ist.

Gemäß einer weiteren Ausführungsform des Schweißkopfs ist dieser derart ausgebildet, dass die Bewegung des Bolzenhalters in Richtung auf den elektrischen Antrieb hin durch einen Anschlag begrenzt ist, wobei der elektrische Antrieb dazu ausgebildet ist, die Kopplungseinheit wahlweise in eine gesicherte Position zu verfahren, in der sich die Kopplungseinheit außerhalb des durch den Anschlag begrenzten Bewegungsbereichs eines zur Kopplung mit der Kopplungseinheit vorgesehenen Elements befindet.

Mit der Begrenzung der Bewegung, respektive des Verfahrens, des Bolzenhalters entlang der Achse durch einen Anschlag kann der Bolzenhalter lediglich in einem vorgesehenen Bereich entlang der Achse bewegt werden, wobei der Bereich vorzugsweise derart gewählt ist, dass sämtliche Bewegungsabläufe beim Schweißvorgang durchführbar sind. Zusätzlich kann der Anschlag ein Verdrehen der Schweißachse und somit ein Verdrehen des mit der Schweißachse verbundenen Bolzenhalters verhindern, was den Verschleiß mindert und die Robustheit fördert.

Mit der gesicherten Position ist ein sicherheitsrelevantes Merkmal geschaffen, da in dieser Position betriebsrelevante Bauteile des Schweißkopfes zusätzlich geschützt sind. Die gesicherte Position der Kopplungseinheit wird durch den Anschlag realisiert, da der Anschlag den Weg des Bolzenhalters derart begrenzt, dass eine mechanische Kopplung zwischen einem mit dem Bolzenhalter starr verbundenen Element, wie beispielsweise dem ferromagnetischen Element, und der Kopplungseinheit, insbesondere dem Elektromagneten, nicht stattfinden kann. Durch die Begrenzung der Bewegung des Bolzenhalters entlang der Achse mittels des Anschlags wird in der gesicherten Position somit bewirkt, dass eine Krafteinwirkung auf den Bolzen, bzw. auf den Bolzenhalter, nicht auf den elektrischen Antrieb einwirkt, sodass der Verschleiß und die Robustheit des Schweißkopfes weiter optimiert sind. Eine solche gesicherte Position ist besonders bevorzugt in allen Betriebszuständen des Schweißkopfes erwünscht, in denen der Bolzenhalter nicht durch den elektrischen Antrieb gezielt entlang der Achse bewegt, bzw. verfahren, wird.

In einer weiteren Ausführungsform ist der elektrische Antrieb lagefest im Gehäuse angeordnet. Hierdurch lassen sich weiterhin Beschädigungen am elektrischen Antrieb minimieren, und die Bauweise des Schweißkopfes komprimieren. Weiterhin bevorzugt weist der Schweißkopf eine zweite Feder auf, wobei der elektrische Antrieb mit dieser zweiten Feder entlang der Achse in Richtung des Werkstücks gedrückt wird. Eine solche zweite Feder dämpft auf den elektrischen Antrieb wirkende Kräfte ab, wobei insbesondere Krafteinwirkungen auf das Gehäuse oder den Motorgehäusedeckel abgeschwächt werden. Dies wirkt sich positiv auf die Robustheit und Funktionssicherheit des Schweißkopfes aus. So werden insbesondere auch Krafteinwirkungen auf den Bolzenhalter im mit dem elektrischen Antrieb gekoppelten Zustand abgeschwächt, wodurch der elektrische Antrieb weniger anfällig für Beschädigungen ist. Weiterhin vorzugsweise ist der elektrische Antrieb auf einer Antriebs-Führungsschiene gelagert, wodurch ein Verdrehen des elektrischen Antriebs verhindert wird, sodass einer Beschädigung des Antriebs entgegengewirkt wird.

Eine besonders bevorzugte Ausbildungsform des Schweißkopfs ist dadurch gekennzeichnet, dass der elektrische Antrieb zum Drehen einer Spindel ausgestaltet ist, wobei durch das Drehen der Spindel die Kopplungseinheit entlang der Achse gegenüber dem elektrischen Antrieb bewegt wird.

Durch eine derartige Ausgestaltung kann die Kopplungseinheit entlang der Achse besonders einfach und flexibel bewegt werden, wobei dynamische Bewegungen entlang der Achse realisierbar sind.

Weiterhin bevorzugt weist die Kopplungseinheit eine Öffnung mit einem Innengewinde auf, das mit einem Außengewinde der Spindel kämmt, wobei vorzugsweise die Kopplungseinheit, wie in einer anderen Ausführungsform bereits vorgeschlagen, einen Elektromagneten umfasst und dieser in Verlängerung der Öffnung mit dem Innengewinde eine Bohrung aufweist, welche eine Aufnahme der Spindel ermöglicht. In einer weiteren Ausführungsform ist die Öffnung mit dem Innengewinde durch ein Gewinde-Element gebildet.

Diese Ausführungsformen ermöglichen ein besonders einfaches und zuverlässiges Verschieben der Kopplungseinheit entlang der Achse.

Gemäß einer weiteren Ausführungsform weißt der Schweißkopf ein Stativelement zur Anlage des Schweißkopfes an das Werkstück auf, wobei das Stativelement fest mit dem Gehäuse verbunden ist.

Eine solches Stativelement ermöglicht das senkrechte Positionieren des zu verschweißenden Bolzens am Werkstück, sodass eine hochwertige Schweißung ermöglicht ist.

Weiterhin kann das Stativelement den Bolzenhalter zumindest teilweise umhüllend ausgebildet sein, wobei das Stativelement mit seiner Hülle den auf einem Werkstück aufgesetzten Bolzen auch seitlich umgibt, sodass Emissionen während des Schweißvorgangs, wie Lichtfunken und geschmolzene Materialien, durch die Hülle des Stativelements abgefangen werden, und die Umgebung der zu verschweißenden Stelle während des Schweißvorgangs geschützt ist, was die Funktionssicherheit und Bedienbarkeit des Schweißkopfs steigert.

Besonders bevorzugt weist der Schweißkopf Mittel zum Bestimmen der aktuellen Position des Bolzenhalters bzw. eines starr mit dem Bolzenhalter verbundenen Elements und/oder der aktuellen Position der Kopplungseinheit auf.

Hierdurch ist eine Regelung der Position des Bolzenhalters und/oder der Kopplungseinheit ermöglicht. Weiterhin wird hierdurch zu jedem Zeitpunkt im Betrieb des Schweißkopfes bewerkstelligt, dass die Position entlang der Achse des Bolzenhalters und/oder der Kopplungseinheit bekannt ist, sodass bestimmte Positionen durch Steuerung des elektrischen Antriebs gezielt angesteuert werden können. Dies steigert die Funktionssicherheit und Bedienbarkeit des Schweißkopfes.

In einer Ausführungsform in welcher sowohl die Position des Bolzenhalters, als auch die Position der Kopplungseinheit bekannt ist, kann beim Kopplungsvorgang die Kopplungseinheit gezielt verfahren werden, wobei beispielsweise die Kopplungseinheit gezielt auf Kontakt mit dem Gegenstück der Kopplung gefahren wird, sodass der Verschleiß des elektrischen Antriebs minimiert ist und die Funktionssicherheit des Schweißkopfes weiter erhöht ist.

In einer Ausführung in welcher der Bolzenhalter mit einem ferromagnetischen Element starr gekoppelt ist und die Kopplungseinheit einen Elektromagneten umfasst, und zudem die Position des Bolzenhalters und der Kopplungseinheit bekannt ist, kann zur Kopplung die Kopplungseinheit entweder gezielt auf Kontakt mit dem ferromagnetischen Element gefahren werden, bevor der Elektromagnet eingeschalten wird, oder der Elektromagnet kann auch in einem bestimmten Abstand zum ferromagnetischen Element positioniert werden, wobei hierbei bei Aktivierung des Elektromagneten das ferromagnetische Element samt damit gekoppeltem Bolzenhalter mit einer hohen Dynamik auf der Achse hin zum Elektromagneten hin bewegt wird, sodass eine besonders schnelle Abhubbewegung während des Schweißprozesses realisierbar ist.

Ferner wird erfindungsgemäß eine Schweißvorrichtung zum Verschweißen eines Bolzens mit einem Werkstück vorgeschlagen, welche eine Ausführungsform eines solchen Schweißkopfes aufweist, wobei es sich bei der Schweißvorrichtung vorzugsweise um eine Schweißpistole handelt.

Eine Verwendung eines solchen Schweißkopfs in einer Schweißvorrichtung, insbesondere in einer Schweißpistole, ist für einen Benutzer besonders handlich und flexibel einsetzbar.

Weiterhin wird erfindungsgemäß ein Verfahren zum Verschweißen eines Bolzens mit einem Werkstück nach dem Prinzip der Hubzündung vorgeschlagen, wobei das Verfahren folgende Schritte aufweist:
a) Koppeln einer steuerbaren Kopplungseinheit eines Schweißkopfs mit einem Bolzenhalter des Schweißkopfs, der mit einem Bolzen bestückt ist;
b) Verfahren des Bolzenhalters entlang einer Achse zum Erzeugen eines Abhubs des Bolzens von dem Werkstück mit Hilfe eines elektrischen Antriebs des Schweißkopfs, wobei der Bolzenhalter mit der Kopplungseinheit gekoppelt ist und durch den Abhub ein Lichtbogen gezündet wird;
c) weiteres Verfahren des Bolzenhalters entlang der Achse zum Eintauchen des Bolzens in eine an dem Werkstück erzeugte Schmelzlinse, wobei das weitere Verfahren des Bolzenhalters
   i) über die gesamte Wegstrecke mit Hilfe des elektrischen Antriebs erfolgt und hierbei der Bolzenhalter mit der Kopplungseinheit gekoppelt ist, oder
   ii) dadurch erfolgt, dass die Kopplung aufgehoben und der Bolzenhalter mit Hilfe eines Federelements des Schweißkopfs gegen das Werkstück verfahren und gedrückt wird, oder
   iii) über einen ersten Teil der Wegstrecke mit Hilfe des elektrischen Antriebs erfolgt und hierbei der Bolzenhalter mit der Kopplungseinheit gekoppelt ist, anschließend die Kopplungseinheit von dem Bolzenhalter gelöst und der Bolzenhalter mit Hilfe eines Federelements des Schweißkopfs gegen das Werkstück verfahren und gedrückt wird.

Ein derartiges Verfahren, mit unterschiedlichen Möglichkeiten die Eintauchbewegung zu realisieren, bietet den Vorzug äußerst flexibel und situationsbedingt den Schweißvorgang durchzuführen. Hierbei können die Eintauchbewegungen an die verwendeten Materialien, die zu verschmelzenden Grundflächen und auch an weitere Anforderungen angepasst sein, sodass der Bolzen flexibel an die Umstände angepasst, möglichst robust und hochwertig verschweißt ist. Mit der in einem solchen Verfahren gegebenen Flexibilität der Durchführung des Schweißvorgangs nach dem Prinzip der Hubzündung wird zudem auch der Verschleiß am Schweißkopf minimiert, da das Verfahren individuell an die Anforderungen anpassbar ist.

Zudem wird erfindungsgemäß ein Verfahren zum Verschweißen eines Bolzens mit einem Werkstück nach dem Prinzip der Spitzenzündung vorgeschlagen, wobei dieses Verfahren die folgenden Schritte aufweist:
a) Koppeln einer steuerbaren Kopplungseinheit eines Schweißkopfs mit einem Bolzenhalter des Schweißkopfs, der mit einem Bolzen bestückt ist;
b) Verfahren des Bolzenhalters entlang einer Achse zum Erzeugen eines Abhubs des Bolzens von dem Werkstück mit Hilfe eines elektrischen Antriebs des Schweißkopfs, wobei der Bolzenhalter mit der Kopplungseinheit gekoppelt ist;
c) Lösen der Kopplungseinheit von dem Bolzenhalter; und
d) Verfahren und Drücken des Bolzenhalters gegen das Werkstück mit Hilfe eines Federelements des Schweißkopfs.

Ein solches erfindungsgemäßes Verfahren zur Durchführung des Schweißvorgangs nach dem Prinzip der Spitzenzündung, birgt den Vorzug einen durch den elektrischen Antrieb erzeugten schnellen Abhub des Bolzens vom Werkstück zu realisieren. Weiterhin wird durch das Lösen der Kopplungseinheit vom Bolzenhalter der elektrische Antrieb geschont, sodass beim Aufdrücken des Bolzens auf das Werkstück keine Krafteinwirkung über den Bolzenhalter und die Kopplungseinheit auf den elektrischen Antrieb wirkt, sodass der Verschleiß minimiert ist. Zudem kann vorgesehen sein, dass der Zeitpunkt des Lösens der Kopplungseinheit flexibel anpassbar ist, sodass je nach Anwendung unterschiedliche Kräfte auf den Bolzenhalter und somit auf den Bolzen durch das Federelement wirken können. Durch das Lösen der Kopplungseinheit wird zudem die durch das Federelement zu beschleunigende Masse reduziert, sodass die Effizienz weiter gesteigert ist. Demnach ist dieses erfindungsgemäße Schweißverfahren nach Prinzip der Spitzenzündung besonders flexibel und effizient in der Durchführung, bietet eine hoher Qualität der herzustellenden Schweißverbindung, wobei der Verschleiß am Schweißkopf reduziert wird.

Beide Verfahren, sowohl das Schweißverfahren nach dem Prinzip der Hubzündung, als auch das Schweißverfahren nach dem Prinzip der Spitzenzündung, können weiterhin vorteilhaft ausgeführt sein. Die im Folgenden beschriebenen Ausführungsformen sind jeweils für beide Verfahren gleichermaßen gültig.

Gemäß einer bevorzugten Ausführungsform der Verfahren, erfolgt die Kopplung zwischen der Kopplungseinheit und dem Bolzenhalter mittels Magnetkraft, wobei die Kopplungseinheit einen Elektromagneten umfasst und der Schweißkopf eine, sich entlang der Achse erstreckende Schweißachse aufweist, die an ihrem vorderen Ende mit dem Bolzenhalter verbunden ist und an ihrem rückwärtigen Ende ein ferromagnetisches Element aufweist, das zum Zusammenwirken mit dem Elektromagneten ausgebildet ist.

Durch eine derartige Kopplung ist der Kopplungsvorgang schnell durchführbar, wobei die Kopplung ebenso schnell wieder aufgelöst werden kann. Somit werden besonders dynamische Bewegungsabläufe ermöglicht, wobei der Zeitpunkt der Kopplung und Entkopplung flexibel an die vorliegenden Umstände des Schweißvorgangs, wie beispielsweise die Materialien des Bolzens und des Werkstücks und/oder die Schmelzfläche des Bolzens und/oder weiterer Einflüsse, anpassbar ist. Zudem wird durch diese Ausführungsform der Verschleiß am elektrische Antrieb des Schweißkopfes minimiert.

In einer vorteilhaften Ausführung der Verfahren wird zum Koppeln der Kopplungseinheit mit dem Bolzenhalter die Kopplungseinheit mit Hilfe des elektrischen Antriebs in Richtung des ferromagnetischen Elements bewegt, wobei vorzugsweise der Elektromagnet der Kopplungseinheit vor Erreichen des ferromagnetischen Elements aktiviert wird.

Hierdurch ist eine besonders einfache und flexible Kopplung bewerkstelligt, wobei das Aktivieren des Elektromagneten vor Erreichen des ferromagnetischen Elements eine zügige Abhubbewegung des mit dem ferromagnetischen Element verbundenen Bolzenhalters ermöglicht, was in beiden Verfahren vorteilhaft ist.

Weiterhin bevorzugt ausgeführt sind die Verfahren dadurch gekennzeichnet, dass die Kopplung ausgehend von einer gesicherten Position der Kopplungseinheit gegenüber dem ferromagnetischen Element erfolgt, vorzugsweise nur, wenn der Schweißkreis durch Aufsetzen des Schweißkopfs auf ein Werkstück und/oder durch Drücken eines Start-Tasters erfolgt und vorzugsweise nach Abschluss der Hubbewegung die Kopplungseinheit wieder in eine gesicherte Position verfahren wird.

Ein Verfahren mit einer solchen gesicherten Position weist eine hohe Funktionssicherheit auf, da der elektrische Antrieb und der Bolzenhalter des Schweißgerätes nur während des Schweißprozesses miteinander gekoppelt sind, und in der gesicherten Position verhindert wird, dass die eine Komponente (bspw. Bolzenhalter) Kraft auf die andere Komponente (bspw. elektrischer Antrieb) ausübt, was weiterhin den Verschleiß der Komponenten verringert. Das Starten und Beenden des Schweißvorgangs in der gesicherten Position ist weiterhin vorteilhaft, da diese Position als Referenz für sämtliche Schweißvorgänge verwendet wird, sodass das Verschweißen eine konstante hohe Genauigkeit und somit Qualität erreicht.

Besonders bevorzugt sind die Verfahren dadurch gekennzeichnet, dass dass der Schweißkopf ein Schweißkopf gemäß einer der zuvor beschriebenen Ausführungsformen ist.

Die Erfindung wird im Folgenden anhand von Ausführungsbeispielen und mit Bezug auf die Zeichnung näher erläutert. Es zeigen:
- Fig. 1A: Seitenansicht einer Ausführung einer Schweißvorrichtung mit einem Schweißkopf;
- Fig. 1B: Draufsicht auf eine Ausführungsform des Schweißkopfes;
- Fig. 2A: Seitenansicht einer beispielhaften Ausführungsform des Schweißkopfes mit innen liegenden Komponenten, sowie einem Werkstück in Schnittdarstellung;
- Fig. 2B: Obersicht auf eine Ausführungsform des Schweißkopfes in Schnittdarstellung, ohne Darstellung des Bolzenhalters, sowie des Stativelements als auch des Bolzens und des Werkstücks;
- Fig. 3: beispielhafte Darstellung einer Wegaufnehmerplatine eines Schweißkopfes;
- Fig. 4: Draufsicht auf einen Teil einer Ausführungsform des Schweißkopfes in Schnittdarstellung, mit Ansicht der Anordnung einzelner Bestandteile des Schweißkopfes;
- Fig. 5: Seitenansicht einer beispielhaften Ausführungsform des Schweißkopfes, wobei die Kopplungseinheit sich in der gesicherten Position befindet und der Bolzen sich nicht in Kontakt mit dem Werkstück befindet;
- Fig. 6: Seitenansicht einer beispielhaften Ausführungsform des Schweißkopfes, wobei die Kopplungseinheit sich in der gesicherten Position befindet und der Bolzen am Werkstück anliegt;
- Fig. 7: Seitenansicht einer beispielhaften Ausführungsform des Schweißkopfes, wobei die Kopplungseinheit sich in einer Kopplungsposition befindet, wobei das ferromagnetische Element mit dem Elektromagneten gekoppelt ist, und wobei der Bolzen am Werkstück anliegt;
- Fig. 8: Seitenansicht einer beispielhaften Ausführungsform des Schweißkopfes, wobei die Kopplungseinheit sich in einer Abhubposition befindet, wobei das ferromagnetische Element mit dem Elektromagneten gekoppelt ist, und der Bolzen vom Werkstück durch den Abhub distanziert ist;
- Fig. 9: Seitenansicht einer beispielhaften Ausführungsform des Schweißkopfes, wobei die Kopplungseinheit sich in einer Eintauchposition während eines Schweißvorgangs nach dem Prinzip der Hubzündung befindet, wobei der Bolzen gegen das Werkstück gedrückt wird und mit diesem verschweißt;
- Fig. 10: Seitenansicht einer beispielhaften Ausführungsform des Schweißkopfes, wobei die Kopplungseinheit sich in einer Entkopplungsposition während eines Schweißvorgangs nach dem Prinzip der Spitzenzündung befindet, und wobei der Bolzen gegen das Werkstück gedrückt wird und mit diesem verschweißt;
- Fig. 11: Seitenansicht einer beispielhaften Ausführungsform des Schweißkopfes, wobei die Kopplungseinheit sich in der gesicherten Position und der Bolzenhalter sich in einer maximalen Rückstellposition befindet, wobei das Stativelement des Schweißkopfes aber nicht der Bolzen selbst am Werkstück anliegt;
- Fig. 12: Seitenansicht einer beispielhaften Ausführung einer Schweißachse mit einer Schweißachsenausnehmung zur Aufnahme des Anschlags eines Schweißkopfes;
- Fig. 13: Seitenansicht eines Teils einer Ausführungsform des Schweißkopfes in Schnittdarstellung, mit Ansicht der Anordnung des elektrischen Antriebs und damit verbundenen Komponenten.

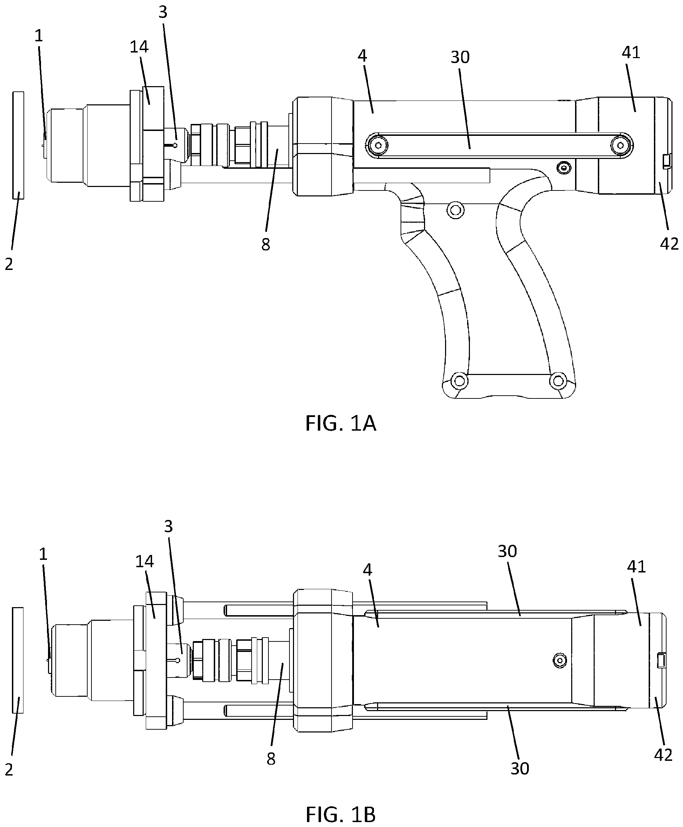

Die Figur 1A zeigt eine seitliche Außenansicht einer Ausführungsform eines erfindungsgemäßen Schweißkopfs, bzw. einer erfindungsgemäßen Schweißvorrichtung, welche als Schweißpistole ausgeführt ist.

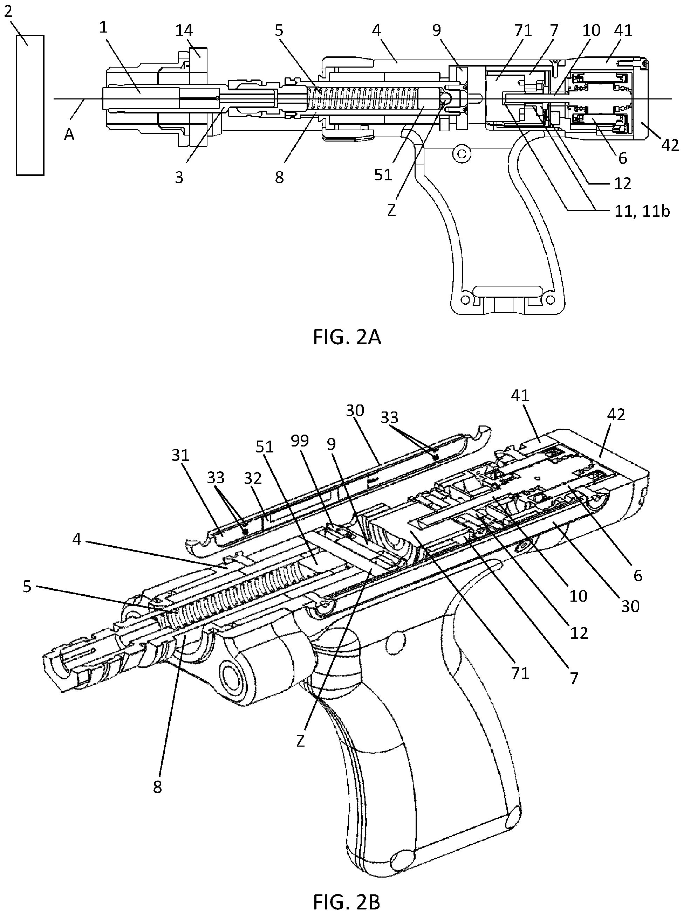

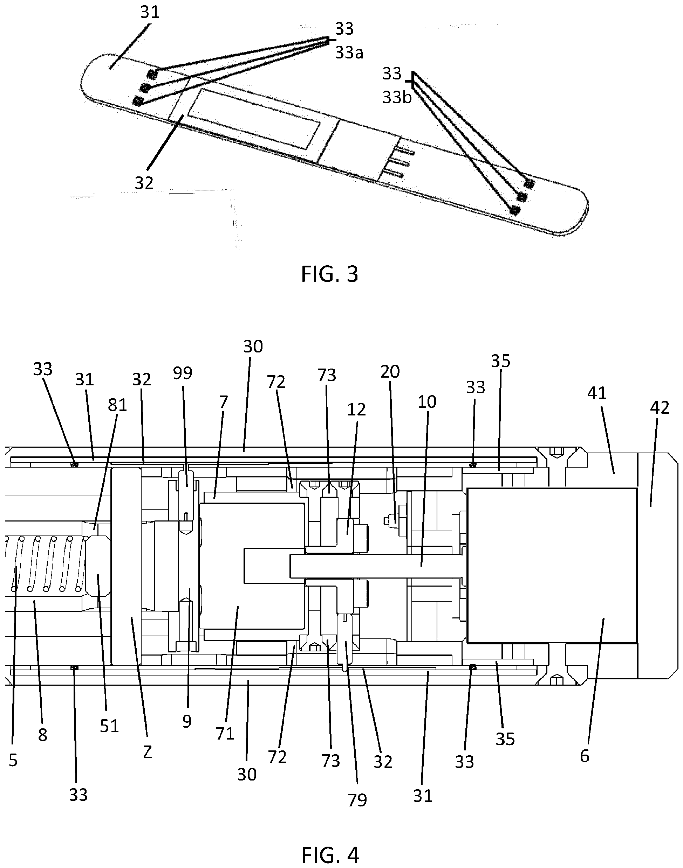

Der Schweißkopf weist neben einem Griff zur einhändigen Haltung durch einen Benutzer ein mit dem Griff verbundenes Gehäuse 4 auf. Ein Motorgehäuse 41 bildet zusammen mit einem Motorgehäusedeckel 42 den hinteren Teil der Schweißpistole, wobei eine Seitenleiste 30 das Gehäuse 4 und das Motorgehäuse 41 verbindet. In der Seitenleiste ist die in Figur 3 näher dargestellte Wegaufnehmerplatine 31 positioniert, wobei diese im Inneren des Schweißkopfes liegt und in der Ansicht der Figur 1A nicht dargestellt ist. Der vordere Teil des Gehäuses 4 verfügt über eine Öffnung aus dem die Schweißachse 8 herausragt, wobei weiterhin der Bolzenhalter 3 mit der Schweißachse 8 starr gekoppelt ist. Den Bolzenhalter 3 zumindest teilweise umgebend ist ein Stativelement 14 gebildet, welches mit dem Gehäuse 4 gekoppelt ist. Zudem wird ein Bolzen 1 im Bolzenhalter 3 gehalten. Mit Hilfe des Stativelements 14 ist eine senkrechte Positionierung des Schweißkopfes und somit eine senkrechte Positionierung des Bolzens 1 an einem Werkstück 2 ermöglicht, wie in Figur 2A gezeigt ist, sodass ein möglichst hochwertiges und optimales Verschweißen des Bolzens 1 mit dem Werkstück 2 bewerkstelligt ist.

In Figur 1B ist eine Draufsicht einer Ausführungsform des Schweißkopfes gezeigt, wobei hierbei die Schweißpistole aus Figur 1A in der Draufsicht dargestellt ist. Hierbei ist erkennbar, dass das Stativelement 14 über zwei Stege mit dem Gehäuse 4 verbunden ist. Zudem ist ersichtlich, dass die Schweißachse 8 und somit auch der Bolzenhalter 3 in Relation zum Gehäuse 4 zentriert angeordnet ist. Weiterhin sind in dieser Darstellung auf beiden Seiten des Gehäuses 4 die Seitenleisten 30 sichtbar angeordnet.

Die Figur 2A zeigt eine Seitenansicht einer beispielhaften Ausführungsform des Schweißkopfes mit innen liegenden Komponenten, sowie einem Werkstück 2 in Schnittdarstellung.

Der Schweißkopf weist hierbei einen Bolzenhalter 3 auf, der in einem Gehäuse 4 des Schweißkopfs entlang einer Achse A beweglich gelagert ist, und wobei im Bolzenhalter 3 ein Bolzen 1 eingesetzt ist. Die Schweißachse 8 erstreckt sich ebenso entlang der Achse A, wobei sie an ihrem vorderen Ende mit dem Bolzenhalter 3 verbunden ist. Der Schweißkopf weist weiterhin ein Federelement 5 auf, welches im vorliegenden Ausführungsbeispiel im Inneren der Schweißachse 8 positioniert ist, und welches den Bolzenhalter 3 entlang der Achse A in Richtung des Werkstücks 2 drückt. Das Federelement 5 liegt auf einer Seite am Bolzenhalter 3 und auf der anderen Seite am Vorspannelement 51 an. Das Vorspannelement 51 kann hierbei unterschiedlich gestaltet sein, wobei durch Variation der Größe des Vorspannelements 51 die Vorspannkraft des Federelements 5 anpassbar ist. Zudem ermöglicht das Vorspannelement 51 eine Zentrierung des Federelements innerhalb der Schweißachse 8. Das Vorspannelement 51 liegt wiederum am Anschlag Z an, wobei der Anschlag Z starr mit dem Gehäuse 4 verbunden ist.

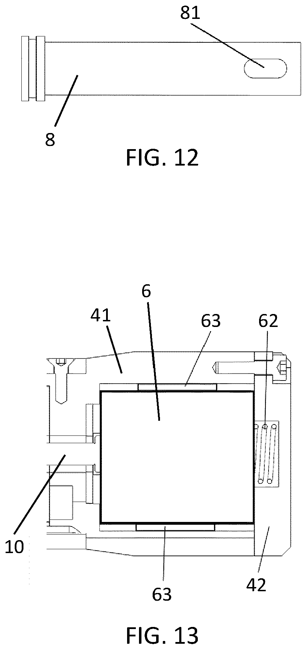

Die Figur 12 zeigt ein Ausführungsbeispiel für die Gestaltung einer Schweißachse 8, wobei die Schweißachse 8 auf jeder Seite eine Schweißachsenausnehmung 81 aufweist, wobei der Anschlag Z durch die Schweißachsenausnehmung 81 geführt ist. Dies bewirkt, dass die Schweißachse 8 lediglich entlang der Achse A bewegt werden kann, wobei die Gestaltung der Schweißachsenausnehmung 81 den Bewegungsbereich der Schweißachse 8 beschränkt. Zudem kann hierdurch die Schweißachse 8 nicht verdreht werden. Eine solche Schweißachse 8 wird auch in der in Figur 2A gezeigten Ausführung verwendet.

Ein Bewegen der Schweißachse 8 entlang der Achse A führt zu einer Stauchung bzw. Entspannung des innenliegenden Federelements 5, wobei eine gestauchte Feder den Bolzenhalter 3 in Richtung des Werkstücks 2 drückt. Zudem ist am rückwärtigen Ende der Schweißachse 8 ein ferromagnetisches Element 9, beispielsweise ein Permanentmagnet, angeordnet. Dieses ferromagnetische Element 9 ist starr mit der Schweißachse 9 verbunden.

Weiterhin weist der Schweißkopf einen elektrischen Antrieb 6, wie beispielsweise einen elektrischen Linearantrieb, auf, der über eine steuerbare Kopplungseinheit 7 wahlweise mit dem Bolzenhalter 3 koppelbar ist und in einem gekoppelten Zustand dazu ausgebildet ist, die Kopplungseinheit 7 mit dem Bolzenhalter 3 entlang der Achse A zu verfahren. Im gezeigten Ausführungsbeispiel ist der elektrische Antrieb 6 lagefest im Gehäuse 4 angeordnet. Durch den Anschlag Z ist die Bewegung des Bolzenhalters 3, bzw. der Schweißachse 8, entlang der Achse A begrenzt.

Der elektrische Antrieb 6 ist dazu ausgebildet, die Kopplungseinheit 7 wahlweise in eine gesicherte Position zu verfahren, in der sich diese außerhalb des durch den Anschlag Z begrenzten Bewegungsbereichs eines zur Kopplung mit der Kopplungseinheit 7 vorgesehenen Elements, wie beispielsweise dem ferromagnetischen Element 9, befindet.

Die steuerbare Kopplungseinheit 7 des in Figur 2A gezeigten Schweißkopfs umfasst einen Elektromagneten 71, welcher wahlweise aktiviert und deaktiviert werden kann, wobei der Elektromagnet 71 eine Kopplung mit dem ferromagnetischen Element 9, und somit mit dem damit gekoppelten Bolzenhalter 3, eingehen kann.

Durch die Kombination des elektrischen Antriebs 6 und einem solchen einfachen Elektromagneten 71 kann der Schweißkopf äußerst kompakt gebaut werden. Die Kopplungseinheit 7 weist zudem eine Öffnung 11 mit einem Innengewinde auf, welche in der vorliegenden Ausführung durch ein Gewinde-Element 12 gebildet ist, wobei der Elektromagnet 71 in Verlängerung der Öffnung 11 eine Bohrung 11b aufweist.

Der elektrische Antrieb 6 ist zum Drehen einer Spindel 10 ausgestaltet, wobei durch das Drehen der Spindel 10 die Kopplungseinheit 7 entlang der Achse A gegenüber dem elektrischen Antrieb 6 bewegt wird. Die Spindel 10 weist ein Außengewinde auf, welches mit dem Gewinde des Gewinde-Elements 12 kämmt, sodass durch eine vom elektrischen Antrieb 6 erzeugte Drehung das Gewinde-Element 12 und somit die Kopplungseinheit 7 entlang der Achse A verfahren wird, wobei die Bohrung 11b des Elektromagneten 71 dazu ausgebildet ist, die Spindel 10 zumindest teilweise aufzunehmen. Durch diese Anordnung ist der Abstand des Elektromagneten 71 zum ferromagnetischen Element 9 flexibel einstellbar. Die Verwendung eines Elektromagneten 71 ist zudem hierbei äußerst effizient, da durch das flexible Annähern des Elektromagneten 71 an das ferromagnetische Element 9 bereits eine geringe Anzugskraft zur Kopplung mit dem ferromagnetischen Element 9 genügt, da vorzugsweise nur ein geringer Spalt, bzw. im Extremfall gar kein Spalt, zwischen dem Elektromagneten 71 und dem ferromagnetischen Element 9 zu überwinden ist.

Neben der in Figur 2A gezeigten Ausführungsform des Kopplungselements 7 mit einem Elektromagneten 71 und einem ferromagnetischen Element 9 als Gegenstück, ist es ebenso denkbar das Kopplungselement 7 und das entsprechende Gegenstück derart auszubilden, dass eine wahlweise Kopplung zwischen elektrischem Antrieb 6 und Bolzenhalter 3 durch eine mechanische Verbindung vorliegt. Hierbei sind mechanische Kopplungen wie beispielsweise eine koppelbare Verzahnung und/oder eine reversible Rastung und/oder ein Bajonettverschluss denkbar. Ebenso sind weitere hier nicht aufgelistete Kopplungsarten denkbar. Insbesondere kann vorgesehen sein, dass die Kopplungseinheit 7 auch als Getriebe gestaltet ist, wobei durch Ein-/ und Auskoppeln zweier Getriebeelemente ein Koppeln und Entkoppeln von elektrischem Antrieb 6 und Bolzenhalter 3, bzw. Schweißachse 8, erreicht werden kann.

Der elektrische Antrieb 6 befindet sich im Inneren des Motorgehäuses 41, welches mit dem Gehäuse 4 verbunden ist, wobei das Motorgehäuse 41 durch einen Motorgehäusedeckel 42 seitlich abgeschlossen ist. Durch Entfernen des Motorgehäusedeckels 42 ist der Antrieb 6 zur Wartung und zum Austausch zugänglich.

Zudem ist das Stativelement 14 mit dem Gehäuse 4 verbunden, wobei ersichtlich ist, dass das Stativelement 14 den Bolzenhalter 3 und somit auch den Bolzen 1 umgibt. Das Stativelement 14 ist zur Anlage des Schweißkopfes an das Werkstück 2 ausgebildet, wobei insbesondere erreicht wird, dass der Schweißkopf möglichst senkrecht auf der Oberfläche des Werkstücks 2 positioniert werden kann, sodass auch der aufzuschweißende Bolzen 1 senkrecht auf dem Werkstück 2 steht, was eine besonders stabile Verschweißung begünstigt.

Die Figur 2B zeigt eine Obersicht auf die in Figur 2A dargestellte Ausführungsform des Schweißkopfes. Hierbei ist der Schweißkopf in Schnittdarstellung dargestellt, wobei der Schnitt horizontal durch die Achse A verläuft. Die Figur 2B zeigt zudem nicht die vollständige Schweißvorrichtung, da das Stativelement 14, sowie der Bolzenhalter 3 als auch der Bolzen 1 und das Werkstück 2 nicht dargestellt sind.

In Figur 2B sind unter anderem die beiden Seitenleisten 30, welche mit dem Gehäuse 4 und dem Motorgehäuse 41 verbunden sind, mit der jeweils innenliegend angeordneten Wegaufnehmerplatine 31 in Schnittdarstellung gezeigt, wobei die einzelnen Komponenten der Wegaufnehmerplatine 31 der rechten Seitenleiste 30 erkennbar sind.

Die Figur 3 zeigt eine Ausführung einer Wegaufnehmerplatine 31 in einer Obersicht, wobei erkennbar ist, dass die Federkontakte 33 symmetrisch auf jeweils gegenüberliegenden Seiten der Oberfläche der Wegaufnehmerplatine 31 angeordnet sind, sodass eine erste Gruppe von Federkontakten 33a und eine zweite Gruppe von Federkontakten 33b gebildet ist. Ebenso ist auf der Wegaufnehmerplatine 31 ein Folienpotentiometer 32 positioniert, welches dazu ausgebildet ist ein Signal entsprechend einer Position einer auf das Folienpotentiometer einwirkenden Kraft auszugeben. Es ist ebenso denkbar eine andere Art der Positionsbestimmung auf der Wegaufnehmerplatine 31 zu platzieren. Das Folienpotentiometer 32 ist in der gezeigten Ausführung näher an der ersten Gruppe von Federkontakten 33a positioniert, wobei zum Betrieb der Wegaufnehmerplatine 31 mit Folienpotentiometer 32 notwendig ist, dass eine der Gruppen von Federkontakten 33a, 33b mit dafür vorgesehenen federnden Kontaktplatinen 35 des Schweißkopfs kontaktiert ist, sodass das Folienpotentiometer 32 betriebsbereit ist, und Signale an den Schweißkopf ausgeben kann. Somit kann die Wegaufnehmerplatine 31 in zwei Orientierungen in den Schweißkopf eingesetzt werden, wobei in der in Figur 2B dargestellten Ausführung des Schweißkopfes das Folienpotentiometer 32 sowohl in der Nähe der Schweißachse 8, als auch in der Nähe der Kopplungseinheit 7 positioniert sein kann.

In Figur 2B ist weiterhin ein federndes Druckstück 99 gezeigt, welches mit der Schweißachse 8 gekoppelt ist. Das federnde Druckstück 99 ist hierbei dazu ausgebildet, einen Druck auf das Folienpotentiometer 32 der gezeigten Wegaufnehmerplatine 31 auszuüben, wobei das Folienpotentiometer 32 entsprechend der Druckposition ein Signal ausgibt, sodass unterschiedliche Positionen der Schweißachse 8 in unterschiedlichen Signalen des Folienpotentiometers 32 resultieren.

Die gegenüberliegende linke Seitenleiste 30 ist ebenso mit einer Wegaufnehmerplatine 31 ausgestattet, wobei das Folienpotentiometer 32 dieser Wegaufnehmerplatine 31 zur Kopplungseinheit 7 hin orientiert angeordnet ist. Der Schweißkopf verfügt ebenso über ein weiteres federndes Druckstück 79, welches mit der Kopplungseinheit 7 gekoppelt ist und Druck auf das Folienpotentiometer 32 der Wegaufnehmerplatine 31 der linken Seitenleiste 30 ausübt, wie in Figur 4 genauer gezeigt ist. Somit wird über die beiden Wegaufnehmerplatinen 31 die Position sowohl der Kopplungseinheit 7, als auch die Position der Schweißachse 8 und somit auch die Position des Bolzenhalters 3 durch die beiden Folienpotentiometer 32 unabhängig voneinander überwacht, sodass der Schweißkopf zu jedem Zeitpunkt die individuellen Positionen dieser Komponenten kennt. Somit ist durch die Positionsüberwachung auch ein automatischer Nullabgleich möglich. Demnach weist der Schweißkopf Mittel zum Bestimmen der aktuellen Position des Bolzenhalters 3, bzw. der Schweißachse 8 und der aktuellen Position der Kopplungseinheit 7 auf. Es ist hierbei nicht zwingend notwendig, dass beide Komponenten überwacht werden, sodass es denkbar ist, dass die Wegaufnehmerplatine 31 nur auf einer Seite des Schweißkopfes vorhanden ist.

In Figur 4 ist eine Draufsicht auf einen Teil einer Ausführungsform des Schweißkopfes in Schnittdarstellung gezeigt. Hierbei sind die Komponenten zur Kopplung der Schweißachse 8 mit dem elektrischen Antrieb 6, sowie die Komponenten zur Positionsbestimmung der Schweißachse 8, respektive des Kopplungselements 7 genauer dargestellt.

Der Elektromagnet 71 liegt am ferromagnetischen Element 9 an, wobei die beiden Komponenten miteinander gekoppelt sind. Weiterhin ist die Schweißachse 8 mit ihren beiden Schweißachsenausnehmungen 81 gezeigt, wobei der Anschlag Z, welcher mit dem Gehäuse 4 verbunden ist, durch die Schweißachsenausnehmungen 81 geführt ist. Ebenso ist ersichtlich, dass das Vorspannelement 51 im Vergleich zu in Figur 2A und 2B gezeigten Ausführungen weniger dick ausgeführt ist, wodurch die Vorspannkraft des Federelements 5 weniger stark ausgebildet ist.

In der Figur 4 sind die beiden Seitenleisten 30 mit ihrer jeweils zugehörigen Wegaufnehmerplatine 31 gezeigt, wobei ebenso die beiden federnden Druckstücke 79, 99 gezeigt sind. In der dargestellten Ausführung ist das federnde Druckstück 99 im ferromagnetischen Element 9 angeordnet, wobei das weitere federnde Druckstück 79 mit der Kopplungseinheit 7 verbunden ist. Bei einer Bewegung eines federndes Druckstücks 79, 99 schleift das jeweilige federnde Druckstück 79, 99 entlang des zugehörigen Folienpotentiometers 32, wodurch die Positionsänderung als Signal ausgegeben wird. Zudem sind in der Nähe des elektrischen Antriebs 6 die federnden Kontaktplatinen 35 gezeigt, welche mit den korrespondierenden Federkontakten 33 der jeweiligen Wegaufnehmerplatinen 31 kontaktiert sind.

Weiterhin weist in der dargestellten Ausführung die Kopplungseinheit 7 Kopplungsführungen 73 auf, welche in zugehörigen Führungsaussparungen 74 des Gehäuses gelagert sind, wodurch die Kopplungseinheit 7 keine Möglichkeit zur Verdrehung innerhalb des Gehäuses hat, sodass der Elektromagnet 71 in seiner Ausrichtung starr ist und eine möglichst effiziente Kopplung ermöglicht ist.

Ebenso ist in der dargestellten Ausführungsform des Schweißkopfes ein Endschalter 20 dargestellt, welcher ein Signal an den Schweißkopf ausgibt, sobald die Kopplungseinheit 7 maximal in Richtung des elektrischen Antriebs 6 zurückgefahren ist, wobei dann diese Position der gesicherten Position entspricht. Somit ist eine einfache und effiziente Möglichkeit zur Bestimmung der gesicherten Position gegeben, wobei die gesicherte Position vorzugsweise den Ausgangspunkt und/oder Endpunkt einer jeden Benutzung des Schweißkopfes darstellt, da in dieser Position zwangsläufig keine mechanische Kopplung zwischen Schweißachse 8 und elektrischem Antrieb 6 vorliegt, sodass keine Kraftübertragung von auf den Bolzenhalter 3 wirkende Kräfte auf den elektrischen Antrieb 6 möglich ist, wodurch ein übermäßiger Verschleiß, bzw. eine Beschädigung des elektrischen Antriebs verhindert wird.

Weiterhin kann, wie in Figur 13 dargestellt, vorgesehen sein, dass der elektrische Antrieb 6 mit einer zweiten Feder 62 entlang der Achse A in Richtung des Werkstücks 2 gedrückt wird. Die zweiten Feder 62 dämpft auf den elektrischen Antrieb 6 wirkende Kräfte ab, wobei insbesondere Krafteinwirkungen auf das Gehäuse 4 oder den Motorgehäusedeckel 42 abgeschwächt werden. Dies wirkt sich positiv auf die Robustheit und Funktionssicherheit des Schweißkopfes aus. So werden insbesondere auch Krafteinwirkungen auf den Bolzenhalter 3 im mit dem elektrischen Antrieb 6 gekoppelten Zustand abgeschwächt, wodurch der elektrische Antrieb 6 weniger anfällig für Beschädigungen ist. Weiterhin vorzugsweise ist der elektrische Antrieb 6 auf einer Antriebs-Führungsschiene 63 gelagert, wodurch ein Verdrehen des elektrischen Antriebs 6 verhindert wird, sodass einer Beschädigung des Antriebs 6 entgegengewirkt wird.

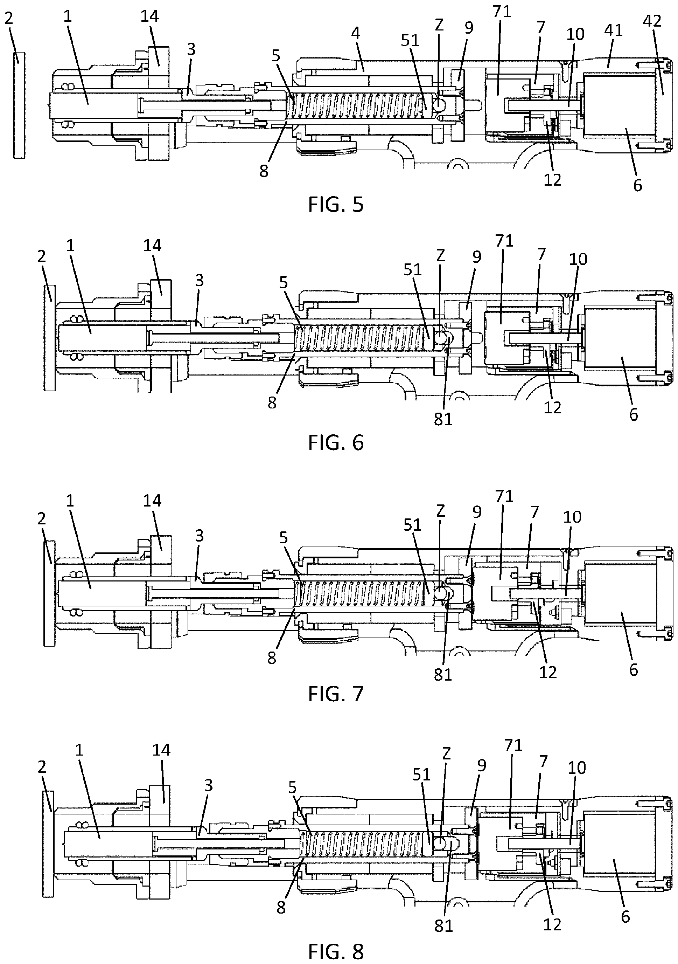

Die Figuren 5 bis 11 zeigen unterschiedliche Verfahrensabschnitte der beiden Verfahren zum Verschweißen eines Bolzens 1 mit einem Werkstück 2. In allen Figuren 5 bis 11 ist eine Seitenansicht einer beispielhaften Ausführungsform des Schweißkopfes mit dessen innen liegenden Komponenten, sowie einem Werkstück in Schnittdarstellung gezeigt, wobei unterschiedliche Positionen der Komponenten des Schweißkopfes dargestellt sind.

In Figur 5 ist die gesicherte Position der Kopplungseinheit 7 gezeigt, sodass die Kopplungseinheit 7, bzw. genauer der Elektromagnet 71 der Kopplungseinheit 7, weder magnetisch noch mechanisch mit der Schweißachse 8, bzw. genauer mit dem ferromagnetischen Element 9 der Schweißachse 8, gekoppelt ist, wobei die Kopplungseinheit 7 und das ferromagnetischen Element 9 voneinander beabstandet sind. Es ist zudem ersichtlich, dass die Kopplungseinheit maximal zurückgefahren ist, wobei der Notschalter 20 gedrückt ist. Die Spindel 10 ist zumindest teilweise in der Bohrung 11b des Elektromagneten 71 aufgenommen. Weiterhin ist erkennbar, dass der Anschlag Z an der dem elektrischen Antrieb 6 zugewandten Seite der Schweißachsenausnehmung 81 anliegt, wobei der Anschlag Z ein weiteres Entspannen der durch das Vorspannelement 51 erzeugten Vorspannung verhindert. Hierdurch wird die Schweißachse 8 und der damit verbundene Bolzenhalter 3 in Richtung des Werkstücks 2 gedrückt, sodass der Bolzen 1 aus dem umhüllenden Stativelement 14, welches starr mit dem Gehäuse 4 verbunden ist, hervorschaut. Diese gesicherte Position wirkt sich weiterhin positiv auf die Kompaktheit des Schweißkopfes aus, da üblicherweise große Spindeln verwendet werden, um unerwünschte Krafteinwirkungen, welche ansonsten direkt auf den elektrischen Antrieb 6 wirken, zu kompensieren. Derartige Spindeln sind allerdings schwer und nicht kompakt, sodass die Bedienbarkeit des Schweißkopfes verschlechtert ist. In einer Ausführungsform des erfindungsgemäßen Schweißkopfes stellt diese gesicherte Position die Anfangsstellung des Schweißkopfes dar, wobei die gesicherte Position nur während des Schweißvorgangs verlassen wird. Die gesicherte Position steigert weiterhin die Funktionssicherheit des Schweißkopfes, da vorgesehen sein kann, dass diese Position auch in Fehlerfällen oder bei unsachgemäßer Verwendung des Schweißkopfes, insbesondere Überlastung, automatisch durch den elektrischen Antrieb 6 eingestellt wird, sodass die Komponenten des Schweißkopfes geschützt sind.

In Figur 6 ist der Schweißkopf, bzw. die Schweißpistole, an das Werkstück 2 angelegt, wobei auch der Bolzen 1 am Werkstück anliegt. Hierbei wird durch das Stativelement 14 eine senkrechte Ausrichtung des Schweißkopfes und somit des Bolzens 1 am Werkstück 2 bewerkstelligt. Weiterhin bildet das Stativelement 14 eine Hülle um den Bolzen 1 und um die für den Schweißvorgang vorgesehene Stelle auf dem Werkstück 2, sodass Emissionen während des Schweißvorgangs, wie Lichtfunken und geschmolzene Materialien, durch die Hülle des Stativelements 14 abgefangen werden, und die Umgebung der zu verschweißenden Stelle des Werkstücks 2 während des Schweißvorgangs geschützt ist, was die Funktionssicherheit und Bedienbarkeit des Schweißkopfs steigert.

Die Kopplungseinheit 7 ist in Figur 6 weiterhin in der gesicherten Position, allerdings ist erkennbar, dass die Position der Schweißachse 8 gegenüber der Darstellung in Figur 5 geändert ist, da durch das Anlegen des Bolzens 1 an das Werkstück 2 der Bolzenhalter 3 und somit auch die Schweißachse 8 in Richtung des elektrischen Antriebs 6 gedrückt werden, wobei das Federelement 5 durch den feststehenden Anschlag Z und das zwischen Anschlag Z und Federelement 5 angeordnete Vorspannelement 51 weiter zusammengestaucht wird, wodurch eine Kraft in Richtung des Werkstücks 2 auf die Schweißachse 8 wirkt. Ebenso ist die Schweißachsenausnehmung 81 erkennbar, welche die Positionsänderung der Schweißachse 8 verdeutlicht.

Die Figur 7 zeigt das Koppeln der steuerbaren Kopplungseinheit 7 mit dem Bolzenhalter 3 der mit dem Bolzen 1 bestückt ist. Der Bolzenhalter 3 ist in der gezeigten Ausführung über die starr mit dem Bolzenhalter 3 verbundene Schweißachse 8, bzw. dem damit verbundenen ferromagnetischen Element 9, mit der Kopplungseinheit 7, bzw. dem Elektromagneten 71, gekoppelt, wobei die Kopplung mittels Magnetkraft erfolgt. Dieser Verfahrensschritt, bzw. diese Koppel-Position, ist sowohl Bestandteil des Verfahrens zum Verschweißen des Bolzens 1 mit dem Werkstück 2 nach dem Prinzip der Hubzündung, als auch nach dem Prinzip der Spitzenzündung. Im Vergleich zur Darstellung in Figur 5 wurde die Kopplungseinheit 7 durch Drehung der Spindel 10 in Richtung des Werkstücks 2 bewegt. Durch die in den Seitenleisten 30 positionierten Wegaufnehmerplatinen 31 und dem jeweils darauf befindlichen Folienpotentiometer 32 kennt der Schweißkopf die Positionen des ferromagnetischen Elements 9 und der Kopplungseinheit 7, bzw. des Elektromagneten 71, sodass der elektrische Antrieb 6 den Elektromagnet 71 gezielt und ohne Belastung auf Kopplungsposition mit dem ferromagnetischen Element 9 bewegen kann. In Figur 7 sind der Elektromagnet 71 und das ferromagnetische Element 9 bereits kontaktiert, wobei der Elektromagnet 71 aktiviert ist, sodass sowohl eine mechanische als auch eine magnetische Kopplung der beiden Komponenten vorliegt.

In einer weiteren Ausführung kann das Koppeln alternativ ausgebildet sein, wobei das Koppeln hierbei dadurch gekennzeichnet ist, dass zum Koppeln der Kopplungseinheit 7 mit dem Bolzenhalter 3 die Kopplungseinheit 7 mit Hilfe des elektrischen Antriebs 6 in Richtung des ferromagnetischen Elements 9 bewegt wird, wobei vorzugsweise der Elektromagnet 71 der Kopplungseinheit 7 vor Erreichen des ferromagnetischen Elements 9 aktiviert wird. Das Aktivieren des Elektromagneten 71 hat den Vorteil, dass der Elektromagnet 71 nicht auf Kontakt mit dem ferromagnetischen Element 9 gefahren werden muss, sodass der Verschleiß des elektrischen Antriebs 6 weiter reduziert ist. Zudem ermöglicht dieses Vorgehen einen schnellen Abhub des Bolzens 1 vom Werkstück 2, was insbesondere beim Verfahren zum Verschweißen nach dem Prinzip der Hubzündung zu einer schnellen Zündung eines Lichtbogens führt. Zur vorzeitigen Aktivierung des Elektromagneten 71 ist es bereits ausreichend, den Elektromagneten 71 auf einen Abstand von 0,5 mm zum ferromagnetischen Element 9 zu fahren. Die durch die Anziehung des ferromagnetischen Elements 9 auf den Elektromagneten 71, und somit auf den elektrischen Antrieb 6 wirkende Kraft ist hierbei vernachlässigbar gering.

Ebenso kann beim Koppeln vorgesehen sein, dass die Kopplung ausgehend von der gesicherten Position der Kopplungseinheit 7 gegenüber dem ferromagnetischen Element 9 vorzugsweise nur dann erfolgt, wenn der Schweißkreis durch Aufsetzen des Schweißkopfs auf ein Werkstück 2 und/oder durch Drücken eines Start-Tasters erfolgt und vorzugsweise nach Abschluss der dann durchgeführten Hubbewegung die Kopplungseinheit 7 wieder in die gesicherte Position verfahren wird.

In Figur 8 befindet sich die Kopplungseinheit 7 des Schweißkopfs in der Abhubposition, wobei die Kopplung weiterhin aktiv ist und die Kopplungseinheit 7 zusammen mit dem gekoppelten Bolzenhalter und somit auch mit dem Bolzen 1 durch den elektrischen Antrieb 6 entlang der Achse A in Richtung des elektrischen Antriebs 6 bewegt ist. Durch diese Bewegung der Kopplungseinheit 7 und der damit gekoppelten Komponenten entsteht ein Abhub zwischen Bolzen 1 und Werkstück 2. Ebenso wird durch das Zurückziehen des Bolzenhalters 3 das Federelement 5 weiter gestaucht.

Das erzeugen des Abhubs ist sowohl Bestandteil des Verfahrens zum Verschweißen des Bolzens 1 mit dem Werkstück 2 nach dem Prinzip der Hubzündung, als auch nach dem Prinzip der Spitzenzündung. Die Abhubhöhe ist hierbei individuell an die Anforderungen des Schweißvorgangs, also an die verwendeten Materialien, die Dicke des Bolzens, und weiteren Anforderungen, anpassbar, wobei durch die Positionsmessung durch die Folienpotentiometer 32 der Wegaufnehmerplatinen 31 die Abhubbewegung geregelt werden kann, sodass insbesondere die Dynamik der Bewegung und die Abhubhöhe anpassbar sind. Hierbei ist es denkbar, dass diese Abhubeinstellungen automatisch durch den Schweißkopf festgelegt werden.

Beim Verfahren zum Verschweißen des Bolzens 1 mit dem Werkstück 2 nach dem Prinzip der Hubzündung (Hubzündungsverfahren) wird durch den Abhub ein Lichtbogen gezündet, wobei durch den Lichtbogen eine Schmelzlinse am Werkstück 2 erzeugt wird. Beim Verfahren zum Verschweißen des Bolzens 1 mit dem Werkstück 2 nach dem Prinzip der Spitzenzündung (Spitzenzündungsverfahren) findet hierbei keine Zündung eines Lichtbogens statt.

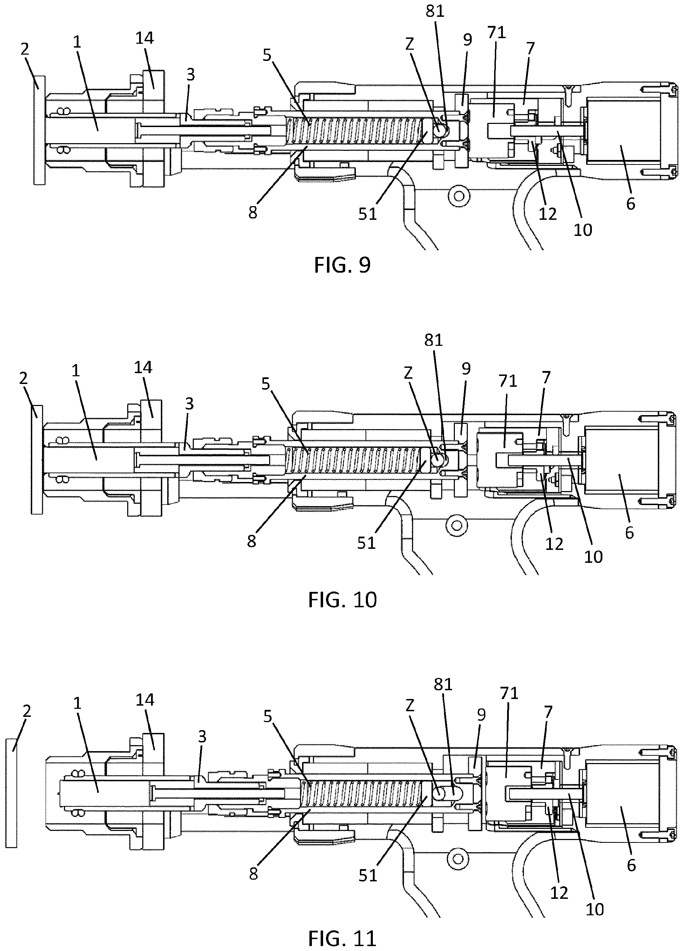

Die Figur 9 zeigt eine Eintauchposition während eines Schweißvorgangs nach dem Prinzip der Hubzündung. Diese Position folgt auf die im vorigen beschriebene Zündung des Lichtbogens beim Hubzündungsverfahren. Hierbei wird der Bolzenhalter 3 ausgehend von der in Figur 8 dargestellten Position in einer weiteren Bewegung entlang der Achse A zum Eintauchen des Bolzens 1 in die am Werkstück 2 durch den Lichtbogen erzeugte Schmelzlinse verfahren. Dieses Verfahren kann unterschiedlich ausgestaltet sein, wobei das weitere Verfahren des Bolzenhalters 3
i) über die gesamte Wegstrecke mit Hilfe des elektrischen Antriebs 6 erfolgen kann und hierbei der Bolzenhalter 3 mit der Kopplungseinheit 7 gekoppelt ist, oder
ii) dadurch erfolgen kann, dass die Kopplung aufgehoben und der Bolzenhalter 3 mit Hilfe des Federelements 5 des Schweißkopfs gegen das Werkstück 1 verfahren und gedrückt wird, oder
iii) über einen ersten Teil der Wegstrecke mit Hilfe des elektrischen Antriebs 6 erfolgen kann, wobei hierbei der Bolzenhalter 3 mit der Kopplungseinheit 7 gekoppelt ist, anschließend die Kopplungseinheit 7 von dem Bolzenhalter 3 gelöst und der Bolzenhalter 3 mit Hilfe des Federelements 5 des Schweißkopfs gegen das Werkstück 1 verfahren und gedrückt wird.

In der Figur 9 ist erkennbar, dass die Kopplungseinheit 7 mit dem ferromagnetischen Element 9 gekoppelt ist, sodass in der vorliegenden Ausführung gemäß der Variante i) des Verfahrens zum Verschweißen nach dem Prinzip der Hubzündung verfahren wurde. Deutlich erkennbar bildet sich in dieser Eintauchposition beim Hubzündungsverfahren eine Schweißnaht zwischen Bolzen 1 und Werkstück 2, wobei die beiden Komponenten miteinander verschweißen. Durch die Positionsüberwachung der Schweißachse 8 und der Kopplungseinheit 7 mittels der Folienpotentiometer 32 der Wegaufnehmerplatinen 31 ist somit eine geregelte Abhubbewegung und eine geregelte Eintauchbewegung möglich, sofern gemäß Variante i) des Hubzündungsverfahrens verfahren wird. In der Ausführungsform gemäß Variante ii) des Hubzündungsverfahrens ist somit eine geregelte Abhubbewegung und eine federbehaftete Eintauchbewegung möglich, wobei die federbehaftete Eintauchbewegung abhängig vom zuvor erzeugten Abhub ist und somit auch beeinflussbar ist. In einer weiteren Ausführungsform gemäß der Variante iii) des Hubzündungsverfahrens wird eine geregelte Abhubbewegung und eine kombinierte Eintauchbewegung realisiert, wobei die kombinierte Eintauchbewegung zunächst bis zu einer bestimmten Position eine geregelte Eintauchbewegung ist, und ab der Position der Entkopplung eine federbehaftete Eintauchbewegung vorliegt. Die federbehafteten Eintauchbewegungen sind hierbei durch Variation des Vorspannelements 51 beeinflussbar. Die dargestellte Ausführungsform des Verfahrens zum Verschweißen nach dem Prinzip der Hubzündung ist mit dem auf dem Werkstück 2 verschweißten Bolzen 1 abgeschlossen, wobei vorgesehen sein kann, dass der Schweißkopf mittels des elektrischen Antriebs 6 die Kopplungseinheit 7 in die gesicherte Position fährt, wobei hierbei die Kopplung zwischen Kopplungseinheit 7 und Schweißachse 8 vorzugsweise gelöst ist.

Die Figur 10 zeigt eine Entkopplungsposition während eines Schweißvorgangs nach dem Prinzip der Spitzenzündung. Wie bereits im obigen erläutert, findet bei der Erzeugung des Abhubs beim Spitzenzündungsverfahren keine Zündung eines Lichtbogens statt. Im Anschluss an die Erzeugung des Abhubs wird im nächsten Verfahrensschritt nach dem Prinzip der Spitzenzündung die Kopplungseinheit 7 vom Bolzenhalter 3 gelöst, beispielsweise durch Deaktivieren des Elektromagneten 71, sodass nun lediglich das gespannte Federelement 5 eine Kraft auf den Bolzenhalter 3 ausübt. Mit Loslösen der Kopplung und zunehmender Beschleunigung des Bolzens 1 in Richtung Werkstück 2 wird hierbei ein Lichtbogen gezündet, welcher wiederum die Bildung einer Schmelze bzw. einer Schmelzlinse auf dem Werkstück verursacht. Mit Hilfe des Federelements 5 des Schweißkopfs wird so der Bolzenhalter 3 mit dem Bolzen 1 in Richtung des Werkstücks 2 mit der Schmelze verfahren und gedrückt. Der Bolzen 1 verschweißt mit dem Werkstück 2. Auch hier ist eine Schweißnaht zwischen Werkstück 2 und verschweißtem Bolzen 1 sichtbar. Die dargestellte Ausführungsform des Verfahrens zum Verschweißen nach dem Prinzip der Spitzenzündung ist mit dem auf dem Werkstück 2 verschweißten Bolzen 1 abgeschlossen, wobei vorgesehen sein kann, dass der Schweißkopf mittels des elektrischen Antriebs 6 die Kopplungseinheit 7 in die gesicherte Position fährt.

In Figur 11 ist eine weitere Ausführung der gesicherten Position gezeigt, wobei der Bolzenhalter 3 sich in einer maximalen Rückstellposition befindet. Diese maximale Rückstellposition wird durch die Position der Schweißachse 8 vorgegeben, wobei der Anschlag Z die dem Werkstück 2 zugewandten Seite der Schweißachsenausnehmung 81 berührt, und somit eine weitere Verschiebung der Schweißachse 8 verhindert. Das Federelement 5 ist in dieser Position maximal gespannt. Die Schweißachse 8 wird durch die über einen Luftspalt aufrecht erhaltene magnetische Kopplung zwischen Elektromagnet 71 und ferromagnetischem Element 9 in diese maximale Rückstellposition gebracht, wobei die magnetische Anziehungskraft größer als die durch das Federelement 5 wirkende Federkraft ist. Die Kopplungseinheit 7 befindet sich in der geschützten Position, was zudem am gedrückten Endschalter 20 erkennbar ist. Durch diese maximale Rückstellung des Bolzenhalters 3 ist der Bolzen 1 in das Stativelement zurückgezogen, sodass bei einem Aufsetzen des Stativelements 14 auf das Werkstück 2 keine Kraft auf den Bolzen 1 wirkt. Diese Position könnte in einer weiteren Ausführung für ein Verfahren zum Verschweißen des Bolzens 1 mit dem Werkstück 2 als Ausgangsposition verwendet werden, wobei hierbei die magnetische Kopplung gelöst wird, beispielsweise durch Deaktivieren des Elektromagneten 71, sodass der Bolzen 1 durch die Federkraft des Federelements 5 gegen das Werkstück 2 verfahren und gedrückt wird, wobei zuvor ein Lichtbogen zur Erzeugung der benötigten Schmelzlinse gezündet wird.

Somit ist ein Schweißkopf, bzw. eine Schweißvorrichtung, beschrieben, welcher ermöglicht sowohl Schweißverfahren nach dem Prinzip der Hubzündung als auch nach dem Prinzip der Spitzenzündung durchzuführen. Der Schweißkopf weist diverse Mechanismen zum Schutz der Komponenten des Schweißkopfes auf, sodass der Schweißkopf äußerst robust gebildet ist, und die Funktionssicherheit stets gegeben ist. Der Schweißkopf ist neben der verschiedenen durchführbaren Schweißverfahren ebenso durch die anpassbare Abhubhöhe, sowie verschiedene Möglichkeiten zur Realisierung einer Eintauchbewegung des Bolzens 1, flexibel in unterschiedlichen Anwendungsszenarien einsetzbar, wobei er mit seiner kompakten Bauweise besonders handlich ist. Durch die Möglichkeit Schweißparameter, wie unter anderem das Schweißverfahren, die Abhubhöhe, die Eintauchbewegung situationsbedingt anzupassen, sowie durch das Stativelement 14, welches eine besonders günstige Positionierung des Bolzens 1 am Werkstück 2 bewerkstelligt und zudem mit seiner Hülle vor Emissionen beim Schweißvorgang schützt, wird eine qualitativ hochwertige Schweißverbindung erzielt.

### Bezugszeichen:

- 1: Bolzen
- 2: Werkstück
- 3: Bolzenhalter
- 4: Gehäuse
- 5: Federelement
- 6: Antrieb
- 7: Kopplungseinheit
- 8: Schweißachse
- 9: ferromagnetisches Element
- 10: Spindel
- 11: Öffnung
- 11b: Bohrung
- 12: Gewinde-Element
- 14: Stativelement
- 20: Endschalter
- 30: Seitenleiste
- 31: Wegaufnehmerplatine
- 32: Folienpotentiometer
- 33: Federkontakte
- 33a: erste Gruppe von Federkontakten
- 33b: zweite Gruppe von Federkontakten
- 35: Federnde Kontaktplatinen
- 41: Motorgehäuse
- 42: Motorgehäusedeckel
- 51: Vorspannelement
- 62: zweite Feder
- 63: Führung der Antriebseinheit
- 71: Elektromagnet
- 73: Kopplungsführung
- 74: Führungsaussparung
- 79: weiteres federndes Druckstück
- 81: Schweißachsenausnehmung
- 99: federndes Druckstück
- A: Achse
- Z: Anschlag

## Patentansprüche

1. Schweißkopf zum Verschweißen eines Bolzens (1) mit einem Werkstück (2), aufweisend
- ein Federelement (5), welches den Bolzenhalter (3) entlang der Achse (A) in Richtung des Werkstücks (2) drückt, und **gekennzeichnet durch**:
- einen Bolzenhalter (3), der in einem Gehäuse (4) des Schweißkopfs entlang einer Achse (A) beweglich gelagert ist,
- eine steuerbare Kopplungseinheit (7), und
- einen elektrischen Antrieb (6), der über die steuerbare Kopplungseinheit (7) wahlweise mit dem Bolzenhalter (3) koppelbar ist und in einem gekoppelten Zustand dazu ausgebildet ist, die Kopplungseinheit (7) mit dem Bolzenhalter (3) entlang der Achse (A) zu verfahren.

2. Schweißkopf nach Anspruch 1,
**dadurch gekennzeichnet,**
**dass** die Kopplungseinheit (7) einen Elektromagneten (71) umfasst.

3. Schweißkopf nach Anspruch 2,
**gekennzeichnet durch**
- eine, sich entlang der Achse (A) erstreckende Schweißachse (8), die an ihrem vorderen Ende mit dem Bolzenhalter (3) verbunden ist und an ihrem rückwärtigen Ende ein ferromagnetisches Element (9) aufweist, das zum Zusammenwirken mit dem Elektromagneten (71) ausgebildet ist.

4. Schweißkopf nach einem der vorherigen Ansprüche,
**dadurch gekennzeichnet,**
**dass** die Bewegung des Bolzenhalters (3) in Richtung auf den elektrischen Antrieb (6) hin durch einen Anschlag (Z) begrenzt ist,
wobei der elektrische Antrieb (6) dazu ausgebildet ist, die Kopplungseinheit (7) wahlweise in eine gesicherte Position zu verfahren, in der sich diese außerhalb des durch den Anschlag (Z) begrenzten Bewegungsbereichs eines zur Kopplung mit der Kopplungseinheit (7) vorgesehenen Elements befindet.

5. Schweißkopf nach einem der vorhergehenden Ansprüche,
**dadurch gekennzeichnet,**
**dass** der elektrische Antrieb (6) lagefest in dem Gehäuse (3) angeordnet ist.

6. Schweißkopf nach einem der vorhergehenden Ansprüche,
**dadurch gekennzeichnet,**
**dass** der elektrische Antrieb (6) mit einer zweiten Feder (62) entlang der Achse in Richtung des Werkstücks (2) gedrückt wird.

7. Schweißkopf nach einem der vorhergehenden Ansprüche,
**dadurch gekennzeichnet,**
**dass** der elektrische Antrieb (6) zum Drehen einer Spindel (10) ausgestaltet ist, wobei durch das Drehen der Spindel (10) die Kopplungseinheit (7) entlang der Achse (A) gegenüber dem elektrischen Antrieb (6) bewegt wird.

8. Schweißkopf nach Anspruch 7,
**dadurch gekennzeichnet,**
**dass** die Kopplungseinheit (7) eine Öffnung (11) mit einem Innengewinde aufweist, das mit einem Außengewinde der Spindel (10) kämmt,
wobei vorzugsweise die Kopplungseinheit (7) gemäß Anspruch 2 einen Elektromagneten (71) umfasst und dieser in Verlängerung der Öffnung (11) mit dem Innengewinde eine Bohrung (11b) aufweist, welche eine Aufnahme der Spindel (10) ermöglicht.

9. Schweißkopf nach Anspruch 8,
**dadurch gekennzeichnet,**
**dass** die Öffnung (11) mit dem Innengewinde durch ein Gewinde-Element (12) gebildet ist.

10. Schweißkopf nach einem der vorhergehenden Ansprüche,
**gekennzeichnet durch**
- ein Stativelement (14) zur Anlage des Schweißkopfes an das Werkstück (2), wobei das Stativelement (14) fest mit dem Gehäuse (4) verbunden ist.

11. Schweißkopf nach einem der vorhergehenden Ansprüche,
**gekennzeichnet durch**
Mittel zum Bestimmen der aktuellen Position des Bolzenhalters (3) bzw. eines starr mit dem Bolzenhalter (3) verbundenen Elements und/oder der aktuellen Position der Kopplungseinheit (7).

12. Schweißvorrichtung zum Verschweißen eines Bolzens (1) mit einem Werkstück (2), aufweisend einen Schweißkopf nach einem der vorhergehenden Ansprüche, wobei es sich bei der Schweißvorrichtung vorzugsweise um eine Schweißpistole handelt.

13. Verfahren zum Verschweißen eines Bolzens (1) mit einem Werkstück (2) nach dem Prinzip der Hubzündung,
**gekennzeichnet durch** die folgenden Schritte:
a) Koppeln einer steuerbaren Kopplungseinheit (7) eines Schweißkopfs mit einem Bolzenhalter (3) des Schweißkopfs, der mit einem Bolzen (1) bestückt ist;
b) Verfahren des Bolzenhalters (3) entlang einer Achse (A) zum Erzeugen eines Abhubs des Bolzens (1) von dem Werkstück (2) mit Hilfe eines elektrischen Antriebs (6) des Schweißkopfs, wobei der Bolzenhalter (3) mit der Kopplungseinheit (7) gekoppelt ist und **durch** den Abhub ein Lichtbogen gezündet wird;
c) weiteres Verfahren des Bolzenhalters (3) entlang der Achse (A) zum Eintauchen des Bolzens (1) in eine an dem Werkstück (2) erzeugte Schmelzlinse, wobei das weitere Verfahren des Bolzenhalters (3)
i) über die gesamte Wegstrecke mit Hilfe des elektrischen Antriebs (6) erfolgt und hierbei der Bolzenhalter (3) mit der Kopplungseinheit (7) gekoppelt ist, oder
ii) **dadurch** erfolgt, dass die Kopplung aufgehoben und der Bolzenhalter (3) mit Hilfe eines Federelements (5) des Schweißkopfs gegen das Werkstück (2) verfahren und gedrückt wird, oder
iii) über einen ersten Teil der Wegstrecke mit Hilfe des elektrischen Antriebs (6) erfolgt und hierbei der Bolzenhalter (3) mit der Kopplungseinheit (7) gekoppelt ist, anschließend die Kopplungseinheit (7) von dem Bolzenhalter (3) gelöst und der Bolzenhalter (3) mit Hilfe eines Federelements (5) des Schweißkopfs gegen das Werkstück (2) verfahren und gedrückt wird.

14. Verfahren zum Verschweißen eines Bolzens (1) mit einem Werkstück (2) nach dem Prinzip der Spitzenzündung,
**gekennzeichnet durch** die folgenden Schritte:
a) Koppeln einer steuerbaren Kopplungseinheit (7) eines Schweißkopfs mit einem Bolzenhalter (3) des Schweißkopfs, der mit einem Bolzen (1) bestückt ist;
b) Verfahren des Bolzenhalters (3) entlang einer Achse (A) zum Erzeugen eines Abhubs des Bolzens (1) von dem Werkstück (2) mit Hilfe eines elektrischen Antriebs (6) des Schweißkopfs, wobei der Bolzenhalter (3) mit der Kopplungseinheit (7) gekoppelt ist;
c) Lösen der Kopplungseinheit (7) von dem Bolzenhalter (3); und
d) Verfahren und Drücken des Bolzenhalters (3) mit dem Bolzen (1) gegen das Werkstück (2) mit Hilfe eines Federelements (5) des Schweißkopfs.

15. Verfahren nach Anspruch 13 oder 14,
**dadurch gekennzeichnet,**
**dass** die Kopplung zwischen der Kopplungseinheit (7) und dem Bolzenhalter (3) mittels Magnetkraft erfolgt, wobei die Kopplungseinheit (7) einen Elektromagneten (71) umfasst und der Schweißkopf eine, sich entlang der Achse (A) erstreckende Schweißachse (8) aufweist, die an ihrem vorderen Ende mit dem Bolzenhalter (3) verbunden ist und an ihrem rückwärtigen Ende ein ferromagnetisches Element (9) aufweist, das zum Zusammenwirken mit dem Elektromagneten (71) ausgebildet ist.

16. Verfahren nach Anspruch 15,
**dadurch gekennzeichnet,**
**dass** zum Koppeln der Kopplungseinheit (7) mit dem Bolzenhalter (3) die Kopplungseinheit (7) mit Hilfe des elektrischen Antriebs (6) in Richtung des ferromagnetischen Elements (9) bewegt wird,
wobei vorzugsweise der Elektromagnet (71) der Kopplungseinheit (7) vor Erreichen des ferromagnetischen Elements (9) aktiviert wird.

17. Verfahren nach einem der Ansprüche 13 bis 16,
**dadurch gekennzeichnet,**
**dass** die Kopplung ausgehend von einer gesicherten Position der Kopplungseinheit (7) gegenüber dem ferromagnetischen Element (9) erfolgt, vorzugsweise nur, wenn der Schweißkreis durch Aufsetzen des Schweißkopfs auf ein Werkstück (2) und/oder durch Drücken eines Start-Tasters erfolgt und vorzugsweise nach Abschluss der Hubbewegung die Kopplungseinheit (7) wieder in eine gesicherte Position verfahren wird.

18. Verfahren nach einem der Ansprüche 13 bis 17,
**dadurch gekennzeichnet,**
**dass** der Schweißkopf nach einem der Ansprüche 1 bis 11 ausgebildet ist.

## Claims

1. Welding head for welding a stud (1) to a workpiece (2), having
- a spring element (5) which pushes the stud holder (3) along the axis (A) in the direction of the workpiece (2), and **characterized by**:
- a stud holder (3) which is mounted in a housing (4) of the welding head so as to be movable along an axis (A),
- a controllable coupling unit (7), and
- an electric drive (6) which is selectively couplable to the stud holder (3) by way of the controllable coupling unit (7) and is configured, in a coupled state, to displace the coupling unit (7) with the stud holder (3) along the axis (A).

2. Welding head according to Claim 1,
**characterized**
**in that** the coupling unit (7) comprises an electromagnet (71) .

3. Welding head according to Claim 2,
**characterized by**
- a welding shaft (8) which extends along the axis (A) and which is connected at its front end to the stud holder (3) and has, at its rear end, a ferromagnetic element (9) which is configured to cooperate with the electromagnet (71) .

4. Welding head according to one of the preceding claims,
**characterized**
**in that** the movement of the stud holder (3) in the direction of the electric drive (6) is limited by a stop (Z),
wherein the electric drive (6) is configured to selectively displace the coupling unit (7) into a secured position in which said coupling unit is outside the movement range, limited by the stop (Z), of an element provided for coupling to the coupling unit (7).

5. Welding head according to one of the preceding claims,
**characterized**
**in that** the electric drive (6) is arranged in the housing (3) in a positionally fixed manner.

6. Welding head according to one of the preceding claims,
**characterized**
**in that** the electric drive (6) is pushed along the axis in the direction of the workpiece (2) by means of a second spring (62).

7. Welding head according to one of the preceding claims,
**characterized**
**in that** the electric drive (6) is designed to rotate a spindle (10), wherein the rotation of the spindle (10) moves the coupling unit (7) along the axis (A) in relation to the electric drive (6).

8. Welding head according to Claim 7,
**characterized**
**in that** the coupling unit (7) has an opening (11) with an internal thread which meshes with an external thread of the spindle (10),
wherein preferably the coupling unit (7) according to Claim 2 comprises an electromagnet (71) and the latter has a bore (11b) in the extension of the opening (11) with the internal thread, said bore making it possible to receive the spindle (10).

9. Welding head according to Claim 8,
**characterized**
**in that** the opening (11) with the internal thread is formed by a threaded element (12).

10. Welding head according to one of the preceding claims,
**characterized by**
- a stand element (14) for abutment of the welding head against the workpiece (2), wherein the stand element (14) is fixedly connected to the housing (4).

11. Welding head according to one of the preceding claims,
**characterized by**
means for determining the current position of the stud holder (3) or of an element rigidly connected to the stud holder (3) and/or the current position of the coupling unit (7).

12. Welding device for welding a stud (1) to a workpiece (2), having a welding head according to one of the preceding claims, wherein the welding device is preferably a welding gun.

13. Method for welding a stud (1) to a workpiece (2) in accordance with the lift ignition principle, **characterized by** the following steps:
a) coupling a controllable coupling unit (7) of a welding head to a stud holder (3) of the welding head, said stud holder being loaded with a stud (1);
b) displacing the stud holder (3) along an axis (A) in order to generate a lift of the stud (1) off from the workpiece (2) with the aid of an electric drive (6) of the welding head, wherein the stud holder (3) is coupled to the coupling unit (7) and an arc is ignited by the lift;
c) displacing the stud holder (3) further along the axis (A) in order to immerse the stud (1) in a lens of melt generated on the workpiece (2), wherein the further displacement of the stud holder (3)
i) is effected over the entire distance with the aid of the electric drive (6) and here the stud holder (3) is coupled to the coupling unit (7), or
ii) is effected by virtue of the coupling being cancelled and the stud holder (3) being displaced and pushed against the workpiece (2) with the aid of a spring element (5) of the welding head, or
iii) is effected over a first part of the distance with the aid of the electric drive (6) and here the stud holder (3) is coupled to the coupling unit (7), and subsequently the coupling unit (7) is released from the stud holder (3) and the stud holder (3) is displaced and pushed against the workpiece (2) with the aid of a spring element (5) of the welding head.

14. Method for welding a stud (1) to a workpiece (2) in accordance with the tip ignition principle, **characterized by** the following steps:
a) coupling a controllable coupling unit (7) of a welding head to a stud holder (3) of the welding head, said stud holder being loaded with a stud (1);
b) displacing the stud holder (3) along an axis (A) in order to generate a lift of the stud (1) off from the workpiece (2) with the aid of an electric drive (6) of the welding head, wherein the stud holder (3) is coupled to the coupling unit (7);
c) releasing the coupling unit (7) from the stud holder (3); and
d) displacing and pushing the stud holder (3) with the stud (1) against the workpiece (2) with the aid of a spring element (5) of the welding head.

15. Method according to Claim 13 or 14,
**characterized**
**in that** the coupling between the coupling unit (7) and the stud holder (3) is effected by means of magnetic force, wherein the coupling unit (7) comprises an electromagnet (71) and the welding head has a welding shaft (8) which extends along the axis (A) and which is connected at its front end to the stud holder (3) and has, at its rear end, a ferromagnetic element (9) which is configured to cooperate with the electromagnet (71).

16. Method according to Claim 15,
**characterized**
**in that**, in order to couple the coupling unit (7) to the stud holder (3), the coupling unit (7) is moved in the direction of the ferromagnetic element (9) with the aid of the electric drive (6),
wherein preferably the electromagnet (71) of the coupling unit (7) is activated before reaching the ferromagnetic element (9).

17. Method according to one of Claims 13 to 16, **characterized**
**in that**, proceeding from a secured position of the coupling unit (7) in relation to the ferromagnetic element (9), the coupling is effected, preferably only, if the welding circuit is effected by placing of the welding head onto the workpiece (2) and/or by pushing of a start button, and, after the lifting movement has been completed, the coupling unit (7) is preferably displaced back into a secured position.

18. Method according to one of Claims 13 to 17, **characterized**
**in that** the welding head is configured according to one of Claims 1 to 11.

## Revendications

1. Tête de soudage permettant de souder un goujon (1) sur une pièce à travailler (2), présentant
- un élément ressort (5) qui pousse le support de goujon (3) le long de l'axe (A) en direction de la pièce à travailler (2), et
**caractérisée par** :
- un support de goujon (3) qui est monté mobile le long d'un axe (A) dans un boîtier (4) de la tête de soudage,
- une unité de couplage (7) pouvant être commandée, et
- un entraînement électrique (6) qui peut être couplé, par l'intermédiaire de l'unité de couplage (7) pouvant être commandée, sélectivement au support de goujon (3) et qui est réalisé, dans un état couplé, pour déplacer l'unité de couplage (7) avec le support de goujon (3) le long de l'axe (A).

2. Tête de soudage selon la revendication 1, **caractérisée en ce que** l'unité de couplage (7) comprend un électroaimant (71).

3. Tête de soudage selon la revendication 2, **caractérisée par**
- un axe de soudage (8) s'étendant le long de l'axe (A) et qui est relié à son extrémité avant au support de goujon (3) et présente à son extrémité arrière un élément ferromagnétique (9) qui est réalisé pour coopérer avec l'électroaimant (71).

4. Tête de soudage selon l'une quelconque des revendications précédentes, **caractérisée en ce que** le mouvement du support de goujon (3) est limité par une butée (Z) en direction de l'entraînement électrique (6),
dans laquelle l'entraînement électrique (6) est réalisé pour déplacer l'unité de couplage (7) sélectivement dans une position sécurisée dans laquelle celle-ci se trouve en dehors de la zone de mouvement limitée par la butée (Z) d'un élément prévu pour le couplage avec l'unité de couplage (7).

5. Tête de soudage selon l'une quelconque des revendications précédentes, **caractérisée en ce que** l'entraînement électrique (6) est disposé de manière stationnaire dans le boîtier (3).

6. Tête de soudage selon l'une quelconque des revendications précédentes, **caractérisée en ce que** l'entraînement électrique (6) est poussé par un deuxième ressort (62) le long de l'axe en direction de la pièce à travailler (2).

7. Tête de soudage selon l'une quelconque des revendications précédentes, **caractérisée en ce que** l'entraînement électrique (6) est configuré pour faire tourner une broche (10), la rotation de la broche (10) déplaçant l'unité de couplage (7) le long de l'axe (A) par rapport à l'entraînement électrique (6).

8. Tête de soudage selon la revendication 7, **caractérisée en ce que** l'unité de couplage (7) présente une ouverture (11) pourvue d'un taraudage qui s'engrène avec un filetage de la broche (10),
dans laquelle de préférence l'unité de couplage (7) selon la revendication 2 comprend un électroaimant (71), et celui-ci présente dans le prolongement de l'ouverture (11) pourvue du taraudage un alésage (11b) qui permet de recevoir la broche (10).

9. Tête de soudage selon la revendication 8, **caractérisée en ce que** l'ouverture (11) pourvue du taraudage est formée par un élément fileté (12).

10. Tête de soudage selon l'une quelconque des revendications précédentes, **caractérisée par**
- un élément de trépied (14) pour appliquer la tête de soudage contre la pièce à travailler (2), l'élément de trépied (14) étant solidaire du boîtier (4).

11. Tête de soudage selon l'une quelconque des revendications précédentes, **caractérisée par**
des moyens pour déterminer la position actuelle du support de goujon (3) ou d'un élément relié rigidement au support de goujon (3) et/ou la position actuelle de l'unité de couplage (7).

12. Dispositif de soudage permettant de souder un goujon (1) sur une pièce à travailler (2), présentant une tête de soudage selon l'une quelconque des revendications précédentes, le dispositif de soudage étant de préférence un pistolet à souder.

13. Procédé permettant de souder un goujon (1) sur une pièce à travailler (2) selon le principe de l'amorçage par plot, **caractérisé par** les étapes suivantes consistant à :
a) coupler une unité de couplage (7) pouvant être commandée d'une tête de soudage avec un support de goujon (3) de la tête de soudage qui est équipée d'un goujon (1) ;
b) déplacer le support de goujon (3) le long d'un axe (A) pour produire un relèvement du goujon (1) de la pièce à travailler (2) à l'aide d'un entraînement électrique (6) de la tête de soudage, le support de goujon (3) étant couplé avec l'unité de couplage (7) et un arc étant amorcé par le relèvement ;
c) déplacer encore le support de goujon (3) le long de l'axe (A) pour plonger le goujon (1) dans une goutte de fusion produite sur la pièce à travailler (2), dans lequel le déplacement supplémentaire du support de goujon (3)
i) est effectué sur la totalité du trajet à l'aide de l'entraînement électrique (6) et le support de goujon (3) est alors couplé avec l'unité de couplage (7), ou
ii) est effectué en ce que le couplage est annulé, et le support de goujon (3) est déplacé et poussé contre la pièce à travailler (2) à l'aide d'un élément ressort (5) de la tête de soudage, ou
iii) est effectué sur une première partie du trajet à l'aide de l'entraînement électrique (6), et le support de goujon (3) est alors couplé avec l'unité de couplage (7), ensuite, l'unité de couplage (7) est détachée du support de goujon (3), et le support de goujon (3) est déplacé et poussé contre la pièce à travailler (2) à l'aide d'un élément ressort (5) de la tête de soudage.

14. Procédé permettant de souder un goujon (1) sur une pièce à travailler (2) selon le principe de l'armorçage par pointe, **caractérisé par** les étapes suivantes consistant à :
a) coupler une unité de couplage (7) pouvant être commandée d'une tête de soudage avec un support de goujon (3) de la tête de soudage qui est équipée d'un goujon (1) ;
b) déplacer le support de goujon (3) le long d'un axe (A) pour produire un relèvement du goujon (1) de la pièce à travailler (2) à l'aide d'un entraînement électrique (6) de la tête de soudage, le support de goujon (3) étant couplé avec l'unité de couplage (7) ;
c) détacher l'unité de couplage (7) du support de goujon (3) ; et
d) déplacer et pousser le support de goujon (3) avec le goujon (1) contre la pièce à travailler (2) à l'aide d'un élément ressort (5) de la tête de soudage.

15. Procédé selon la revendication 13 ou 14, **caractérisé en ce que** le couplage entre l'unité de couplage (7) et le support de goujon (3) est effectué au moyen d'une force magnétique, l'unité de couplage (7) comprenant un électroaimant (71), et la tête de soudage présentant un axe de soudage (8) s'étendant le long de l'axe (A) et qui est relié à son extrémité avant au support de goujon (3) et présente à son extrémité arrière un élément ferromagnétique (9) qui est réalisé pour coopérer avec l'électroaimant (71).

16. Procédé selon la revendication 15, **caractérisé en ce que** pour le couplage de l'unité de couplage (7) avec le support de goujon (3), l'unité de couplage (7) est déplacée à l'aide de l'entraînement électrique (6) en direction de l'élément ferromagnétique (9),
dans lequel, de préférence, l'électroaimant (71) de l'unité de couplage (7) est activé avant d'atteindre l'élément ferromagnétique (9).

17. Procédé selon l'une quelconque des revendications 13 à 16, **caractérisé en ce que** le couplage est effectué en partant d'une position sécurisée de l'unité de couplage (7) par rapport à l'élément ferromagnétique (9), de préférence uniquement lorsque le circuit de soudage est effectué en posant la tête de soudage sur une pièce à travailler (2) et/ou en appuyant sur un bouton de démarrage, et de préférence, l'unité de couplage (7) est ramenée à une position sécurisée à l'issue du mouvement de relèvement.

18. Procédé selon l'une quelconque des revendications 13 à 17, **caractérisé en ce que** la tête de soudage est réalisée selon l'une quelconque des revendications 1 à 11.
